# EUROPÄISCHE PATENTANMELDUNG

(11) **EP 4 613 551 A2**
(43) Veröffentlichungstag der Anmeldung: **10.09.2025**
(21) Anmeldenummer: 25189997.7
(22) Anmeldetag: 26.04.2024
(51) Int. Cl.: B60N 3/00

(54) **MÖBELMODUL**

(30) Priorität: 12.07.2023 DE 202023103903 U; 12.07.2023 DE 202023103904 U; 12.07.2023 DE 202023103905 U
(62) Teilanmeldung aus: 24172648.8
(71) Anmelder: Hobby-Wohnwagenwerk Ing. Harald Striewski GmbH, 24787 Fockbek (DE)
(72) Erfinder: Salama, Samuel, 24647 Wasbek (DE)
(74) Vertreter: Brinkmann & Partner

(57) **Zusammenfassung**

Die Erfindung betrifft ein Möbelmodul (1) für den Einbau in einen Wohnwagen, ein Reisemobil, einen Kastenwagen und/oder dergleichen, mit einem Grundelement (2), das einen Nutzraum (12) bereitstellt, und einer Mehrzahl von Betteinrichtungen (30, 31, 32) zur Unterbringung im Nutzraum (12), wobei die Betteinrichtungen (30, 31, 32) verwenderseitig nach dem Baukastenprinzip wahlweise miteinander kombinierbar ausgebildet und mit Mitteln ausgerüstet sind, die dazu eingerichtet sind, die Betteinrichtungen (30, 31, 32) verwenderseitig werkzeuglos am Grundelement (2) lösbar, gleichwohl aber positionssicher anzuordnen, dadurch gekennzeichnet, dass das Grundelement (2) eine Rückwand (3) sowie zwei sich daran anschließende Seitenteile (4, 5) aufweist und dass das Grundelement (2) in seinen geometrischen Abmessungen einen vom Wohnwagen, Reisemobil, Kastenwagen und/oder dergleichen bereitgestellten Einbauraum ausnutzend ausgebildet ist, wobei die Rückwand (3) einen vom Grundelement (2) bereitgestellten Volumenraum (10) in einen ersten, als Luftverteilraum dienenden Volumenraumbereich (11) einerseits und einen zweiten Volumenraumbereich andererseits unterteilt, wobei der zweite Volumenraumbereich den Nutzraum (12) bildet und wobei die Rückwand (3) für eine strömungstechnische Verbindung der beiden Volumenraumbereiche (11, 12) eine Durchtrittsöffnung (9) aufweist.

## Beschreibung

Die Erfindung betrifft ein Möbelmodul für den Einbau in einen Wohnwagen, ein Reisemobil, einen Kastenwagen und/oder dergleichen, mit einem Grundelement, das einen Nutzraum bereitstellt, und einer Mehrzahl von Betteinrichtungen zur Unterbringung im Nutzraum, wobei die Betteinrichtungen verwenderseitig nach dem Baukastenprinzip wahlweise miteinander kombinierbar ausgebildet und mit Mitteln ausgerüstet sind, die dazu eingerichtet sind, die Betteinrichtungen verwenderseitig werkzeuglos am Grundelement lösbar, gleichwohl aber positionssicher anzuordnen.

Derartige Möbelmodule sind aus dem Stand der Technik grundsätzlich bekannt, so zum Beispiel aus der US 2017/354264 A1.

Bei einem Möbelmodul nach der Erfindung handelt es sich um fabrikseitig vorgefertigte Bauelemente eines Wohnwagens bzw. eines Reisemobils, die insgesamt bei der Herstellung eines Wohnwagens oder eines Reisemobils in den Innenraum integriert und befestigt werden. Bei diesen Modulen hat es sich als vorteilhaft erwiesen, dass eine annähernd vollständige Fertigung des Moduls außerhalb des Wohnwagens bzw. des Reisemobils fabrikseitig möglich ist, woraufhin das vorgefertigte Modul mit allen dazu gehörenden Elementen insgesamt auf eine Bodengruppe des Wohnwagens bzw. eines Fahrgestells oder Chassis des Reisemobils aufgesetzt und dort verankert wird. Derartige Module erleichtern die Serienfertigung von Wohnwagen und Reisemobilen, sind aber auch gleichzeitig hinsichtlich ihrer Individualität sehr stark eingeschränkt, um die Produktionskosten in einem wettbewerbsfähigen Bereich zu halten. Grundsätzlich besteht die Möglichkeit, den Innenraum eines Wohnwagens oder Reisemobils vollständig aus entsprechenden Modulen zusammenzusetzen, so dass während der Fertigung des Wohnwagens bzw. des Reisemobils die einzelnen Module parallel zur Fertigung des Chassis mit der Bodengruppe möglich ist. Durch eine solche parallele Fertigung können die Produktionszeiten eines Wohnwagens bzw. eines Reisemobils deutlich reduziert werden.

So ist beispielsweise aus der DE 20 2019 002 704 U1 eine Innenausbauvorrichtung in Form eines Raumsystems zum Öffnen und Schließen in unterschiedlichen Größen, nutzbar als Schrank, etwa zur Aufbewahrung von Kleidung oder sonstigen Gegenständen, auch als begehbarer Kleiderschrank bekannt. Dieses Raumsystem ist als Möbel an oder in eine Wand oder sonstigen Raumteil fest installiert. Vorgesehen sind in dem Raumsystem An- und Einbauten, wie Kleiderstangen und/oder Schubfächer.

Weiterhin offenbart die DE 10 2021 115 920 A1 ein Möbelbauteil für Möbel von Freizeitfahrzeugen, insbesondere von Wohnmobilen oder Wohnwagen. Hierfür sind mehrere Faltelemente vorgesehen, von denen zumindest eines ein Rückwandelement ist, das im montierten Zustand zumindest teilweise eine Rückseite des Möbels bildet. Die Faltelemente sind an Verbindungslinien zueinander faltbar. Das Möbelbauteil ist einstückig aus den Faltelementen gefertigt.

Aus dem Stand der Technik ist gemäß der DE 35 03 988 A1 ferner ein Wohnmobil mit in zwei übereinander angeordneten Ebenen vorhandenen Betten bekannt, welche sich in Längsrichtung des Wohnmobils erstrecken, wobei zwischen den Betten in der unteren Ebene ein in Längsrichtung des Wohnmobils mittig verlaufender Gang vorgesehen ist.

Aus der DE 10 2020 007 565 A1 ist ein Schlafmodul für einen mobilen Wohnraum bekannt. Das Schlafmodul weist ein Liegeelement mit einer Matratze und einen Matratzenrost für die Matratze auf. Ferner ist eine Schwenkvorrichtung vorgesehen, die eingerichtet ist, das Liegeelement zwischen einer vertikalen Anordnung und einer horizontalen Anordnung des Liegeelements hin und her zu bewegen. Ferner ist eine Verschiebevorrichtung vorgesehen, die einem linearen Verschieben des Schlafmoduls quer zu einer Schwenkachse der Schwenkvorrichtung dient.

Die DE 90 13 337 U1 offenbart ein Unterkunftsmodul. Dieses verfügt über für den Transport verkleinerbare Abmessungen, wobei das Unterkunftsmodul in der Transportkonfiguration eine quaderförmige, mittels einer inneren Wandung in zwei Raumeinheiten aufgeteilte Struktur aufweist.

Aus der DE 203 19 970 U1 ist ein Wohnwagen, ein Reisemobil oder dergleichen bekannt, das einen Wohnbereich, einen Kleiderschrank, eine Sanitärzelle, eine Küche und ein in Fahrzeuglängsrichtung ausgerichtetes Bett aufweist. Dabei ist die Küche als Winkelküche ausgebildet und sie verfügt über zwei Schenkel, wobei in dem einen Schenkel ein Kochherd und in dem anderen Schenkel eine Spüle angeordnet sind.

Aus der DE 20 2006 009 505 U1 ist ein Einbauschlafmöbel zum Einbau in einen Kastenwagen, ein Wohnmobil oder dergleichen bekannt. Dieses Einbauschlafmöbel verfügt über eine mehrteilige Matratzenunterlage und eine mehrteilige Matratze, wobei die Matratzenunterlage ein nach oben verschwenkbares Matratzenunterlagen-Element aufweist.

Die schon eingangs genannte US 2017/354264 A1 offenbart ein Etagenbett, welches zwei Kopfteile aufweist. Zwischen den beiden Kopfteilen kann eine Mehrzahl von Betteinrichtungen angebracht werden. Die Betteinrichtungen werden hierzu mittels kopf- und fußseitig angebrachter Haken in hierzu eingerichteten Leisten an den Kopfteilen eingehängt. Anstatt mehrerer Betteinrichtungen kann auch nur eine Betteinrichtung an einem in Höhenrichtung oberen Ende der Kopfteile eingehakt werden. Der Bereich unter dieser einen Betteinrichtung kann dann dazu genutzt werden, um hier weitere Möbelstücke wie z. B. Ablagen oder Tische ebenfalls mit Haken an den Leisten der beiden Kopfteile einzuhängen.

Die KR 2010 0007855 U offenbart ein Etagenbett welches zwei Seitenrahmen sowie einen vorderen und einen hinteren Rahmen aufweist. In dem von den zwei Seitenrahmen und dem vorderen und dem hinteren Rahmen bereitgestellten Volumenraum ist eine Betteinrichtung untergebracht. Eine weitere Betteinrichtung ist über dem Volumenraum angebracht. Der Zusammenbau sowie der Abbau des Etagenbettes erfolgt durch ein Nut- und Feder-Stecksystem.

Die US 11 535 146 B2 offenbart ein Etagenbett für ein Wohnmobil. Das Etagenbett weist einen Rahmen auf, an welchem zwei Betteinrichtungen klappbar mittels Klavierbandscharnieren angebracht sind. Die Befestigung des Klavierbandscharniers an der in Höhenrichtung oberen und der in Höhenrichtung unteren Betteinrichtung sowie die Befestigung der Klavierbandscharniere an dem Rahmen erfolgt mittels konventioneller Schrauben. Durch die Klavierbandscharniere ist es möglich, sowohl die in Höhenrichtung untere Betteinrichtung des Etagenbettes als auch die in Höhenrichtung obere Betteinrichtung des Etagenbettes in Höhenrichtung nach oben zu klappen, so dass beide Betteinrichtungen eine vertikale Position parallel zum Rahmen einnehmen. Durch Riegel können die Betteinrichtungen in dieser vertikalen Position gehalten werden.

Sind beide Betteinrichtungen in einer heruntergeklappten Position, so bietet das Etagenbett zwei Schlafplätze. Unterhalb der unteren Betteinrichtung ist ein erster Volumenraum als Stauraum angeordnet. In diesem Stauraum können beispielsweise Äxte, Schaufeln, Angelruten oder andere im Außenbereich nutzbare Utensilien untergebracht werden. Wird die untere Betteinrichtung in die vertikale Position geklappt, so wird der Stauraum auf einen zweiten Volumenraum, der größer ist als der erste Volumenraum vergrößert. In diesem zweiten Volumenraum können beispielsweise Fahrräder oder auch motorisierte Roller untergebracht werden.

Die DE 603 13 699 T2 offenbart eine verschiebbare Trennwand für einen Lieferwagen. In einer ersten Position befindet sich die verschiebbare Trennwand unmittelbar hinter einem Fahrer- bzw. Beifahrersitz des Lieferwagens. Von dieser ersten Position kann die verschiebbare Trennwand beispielsweise entlang einer Schiene in eine zweite Position verschoben werden. Die zweite Position ist dabei im Vergleich zur ersten Position weiter in Richtung des Hecks des Lieferwagens verschoben.

An der Trennwand sind auf einer dem Fahrer- und Beifahrersitz zugewandten Seite in Höhenrichtung übereinander zwei Sitzpolster angeordnet. Werden die Sitzpolster nicht benötigt, so sind beide Sitzpolster derart hochgeklappt, dass sie parallel zur Trennwand in einer vertikalen Position an der Trennwand anliegen.

Die Trennwand weißt eine Öffnung auf. Durch diese Öffnung können lange Lasten, die mit dem Lieferwagen transportiert werden sollen, in den Bereich des Fahrer- bzw. Beifahrersitzes des Lieferwagens hineinreichen.

Obgleich sich die aus dem vorbenannten Stand der Technik bekannten Konstruktionen im alltäglichen Praxiseinsatz bewährt haben, besteht Verbesserungsbedarf, insbesondere mit Blick auf eine vereinfachte Handhabung. Ausgehend von dem voranstehend beschriebenen Stand der Technik liegt der Erfindung daher die **Aufgabe** zugrunde, ein Möbelmodul derart auszubilden, dass es hinsichtlich seiner Nutzung an individuelle Bedürfnisse anpassbar ist, ohne den Vorteil der vorgefertigten und einbaufertigen Modulbauweise zu verlieren, und dass eine individuelle Anpassbarkeit auch ohne eine intensive manuelle Fertigung erreichbar ist.

Zur **Lösung** der vorstehenden Aufgaben wird vorgeschlagen ein Möbelmodul für den Einbau in einen Wohnwagen, ein Reisemobil, einen Kastenwagen und/oder dergleichen, mit einem Grundelement, das einen Nutzraum bereitstellt, und einer Mehrzahl von Betteinrichtungen zur Unterbringung im Nutzraum, wobei die Betteinrichtungen verwenderseitig nach dem Baukastenprinzip wahlweise miteinander kombinierbar ausgebildet und mit Mitteln ausgerüstet sind, die dazu eingerichtet sind, die Betteinrichtungen verwenderseitig werkzeuglos am Grundelement lösbar, gleichwohl aber positionssicher anzuordnen, dadurch gekennzeichnet, dass das Grundelement eine Rückwand sowie zwei sich daran anschließende Seitenteile aufweist und dass das Grundelement in seinen geometrischen Abmessungen einen vom Wohnwagen, Reisemobil, Kastenwagen und/oder dergleichen bereitgestellten Einbauraum ausnutzend ausgebildet ist, wobei die Rückwand einen vom Grundelement bereitgestellten Volumenraum in einen ersten, als Luftverteilraum dienenden Volumenraumbereich einerseits und einen zweiten Volumenraumbereich andererseits unterteilt, wobei der zweite Volumenraumbereich den Nutzraum bildet und wobei die Rückwand für eine strömungstechnische Verbindung der beiden Volumenraumbereiche eine Durchtrittsöffnung aufweist.

Das erfindungsgemäße Möbelmodul verfügt über ein Grundelement. Dieses stellt einen als Nutzraum verwendbaren Volumenraumbereich zur Verfügung.

Das Möbelmodul verfügt ferner über eine Mehrzahl von Betteinrichtungen, die im bestimmungsgemäßen Verwendungsfall im Nutzraum des Grundelements untergebracht sind. Der vom Grundelement bereitgestellte Nutzraum dient insofern als Bett- und/oder Schlafbereich.

Es ist vorgesehen, dass die Betteinrichtungen verwenderseitig nach dem Baukastenprinzip wahlweise miteinander kombinierbar ausgebildet sind. "Nach dem Baukastenprinzip" im Sinne der Erfindung bedeutet, dass mehrere unter Umständen auch unterschiedlich ausgebildete Betteinrichtungen zur Verfügung stehen. Diese können vom Verwender wahlweise genutzt und am Grundelement angeordnet werden. Der Verwender hat insofern die Freiheit, in den vom Grundelement bereitgestellten Nutzraum eine Betteinrichtung oder auch mehrere Betteinrichtungen einzubringen. Der Nutzraum kann mithin im bestimmungsgemäßen Verwendungsfall von mehreren Personen als Schlafkoje genutzt werden.

Die Betteinrichtungen sind ferner mit Mitteln ausgerüstet, welche Mittel dazu eingerichtet sind, die Betteinrichtungen verwenderseitig werkzeuglos am Grundelement anzuordnen. Verwenderseitig ist es so gestattet, die einzelnen Betteinrichtungen in einfacher Weise zu montieren bzw. zu demontieren. Dies gestattet eine verwenderseitige Individualisierung des Grundelements bei der Bestückung mit Betteinrichtungen. Es können in diesem Zusammenhang auch Betteinrichtungen gegeneinander ausgetauscht, an unterschiedlichen Stellen am Grundmodul befestigt und/oder entfernt werden, je nach verwenderseitig gewünschter Nutzung des vom Grundelement bereitgestellten Nutzraums. Im Ergebnis können so höchsten individuellen Ansprüchen Rechnung getragen werden, da sowohl die zur Verfügung stehenden Betteinrichtungen wahlweise miteinander kombiniert als auch wahlweise am Grundelement angeordnet werden können.

Die von den Betteinrichtungen bereitgestellten Mittel zur lösbaren Anordnung am Grundelement sind auch dazu eingerichtet, eine positionssichere Anordnung am Grundelement zu bewerkstelligen. Damit ist nicht nur eine lösbare Anordnung der Betteinrichtungen realisiert, es ist auch eine verwendungssichere Ausgestaltung gegeben. Insbesondere ist es durch die positionssichere Anordnung gewährleistet, dass Betteinrichtungen nicht ungewollt vom Grundelement gelöst, d. h. entfernt werden können.

Mit dem Möbelmodul ist es in vorteilhafter Weise im Ergebnis möglich, den vom Grundelement des Möbelmoduls bereitgestellten Nutzraum als Bettbereich zu nutzen. Zu diesem Zweck können am Grundelement zur Unterbringung im Nutzraum Betteinrichtungen angeordnet werden. Es stehen mehrere unter Umständen auch unterschiedlich ausgebildete Betteinrichtungen zur Verfügung, die verwenderseitig wahlweise genutzt und zu diesem Zweck lösbar am Grundelement angebracht werden können. Dabei erfolgt die Montage bzw. Demontage einer Betteinrichtung werkzeuglos und die Anordnung am Grundelement ist lösbar, gleichwohl aber positionssicher.

Gemäß einer bevorzugten Ausführungsform der Erfindung können bis zu drei Betteinrichtungen vorgesehen sein, die in Höhenrichtung des Möbelmoduls übereinander angeordnet sind. In diesem Fall finden im Nutzraum des Grundelements in Form einer Schlafkoje drei Personen bequem Platz. Alternativ zu einer solchen Ausgestaltung kommen nur zwei Betteinrichtungen zum Einsatz, in welchem Fall ein zusätzlicher Stauraum unterhalb der in Höhenrichtung zuunterst angeordneten Betteinrichtung entsteht. Selbstverständlich kann das Grundelement auch nur mit einer Betteinrichtung bestückt sein, in welchem Fall ein im Vergleich zur ersten Variante sehr viel größerer Stauraum entsteht, der dann verwenderseitig auch anders genutzt werden kann, beispielsweise als "Spielhöhle" für Kinder, als Sitzgelegenheit, als Arbeitsplatzgelegenheit, als Hundeplatz und/oder dergleichen. Die Ausgestaltung schafft mithin verwenderseitig die Möglichkeit, den vom Möbelmodul definierten zur Verfügung gestellten Nutzraum individuell nutzen zu können.

Erfindungsgemäß wird vorgeschlagen, dass das Grundelement eine Rückwand sowie zwei sich daran anschließende Seitenteile aufweist. Das Grundelement ist mithin im Querschnitt u-förmig ausgebildet. Das Grundelement ist in seinen geometrischen Abmessungen einen vom Wohnwagen, Reisemobil, Kastenwagen und/oder dergleichen bereitgestellten Einbauraum ausnutzend ausgebildet. Dabei unterteilt die Rückwand den vom Grundelement bereitgestellten Volumenraum in einen ersten, als Luftverteilraum dienenden Volumenraumbereich einerseits und einen zweiten Volumenraumbereich andererseits. Der zweite Volumenraumbereich bildet den Nutzraum. Die Rückwand weist für eine strömungstechnische Verbindung der beiden Volumenraumbereiche eine Durchtrittsöffnung auf.

Das erfindungsgemäße Möbelmodul verfügt über das schon vorbeschriebene Grundelement. Dieses ist u-förmig ausgebildet und weist die Rückwand sowie zwei sich daran anschließende Seitenteile auf. In ihrer Kombination sind die Rückwand und die Seitenteile so angeordnet, dass sich die im Querschnitt u-förmige Ausgestaltung des Grundelements ergibt.

Das Grundelement ist in seinen geometrischen Abmessungen im Übrigen so ausgebildet, dass es den vom Wohnwagen, Reisemobil, Kastenwagen und/oder dergleichen bereitgestellten Einbauraum vollständig ausnutzt. Eine mögliche Positionierung des Möbelmoduls kann im Heckbereich des Wohnwagens, des Reisemobils, des Kastenwagens und/oder dergleichen stattfinden. Dabei erstreckt sich das Grundelement des Möbelmoduls in diesem Fall quer zur üblichen Fahrtrichtung des Wohnwagens, des Reisemobils, des Kastenwagens und/oder dergleichen.

Das Grundelement des Möbelmoduls stellt den vom Grundelement umgebenden Volumenraum bereit. Dieser Volumenraum ist erfindungsgemäß von der Rückwand des Grundelements unterteilt, und zwar in den ersten Volumenraumbereich einerseits und den zweiten Volumenraumbereich andererseits. Dabei dienen im bestimmungsgemäßen Verwendungsfall des Möbelmoduls der erste Volumenraumbereich als Luftverteilraum und der zweite Volumenraumbereich als Nutzraum, beispielsweise zur Aufnahme von Betteinrichtungen.

Es ist ferner vorgesehen, dass die Rückwand die Durchtrittsöffnung aufweist. Diese Durchtrittsöffnung dient für die strömungstechnische Verbindung der beiden Volumenraumbereiche. Es kann mithin im bestimmungsgemäßen Verwendungsfall des Möbelmoduls ein Luftaustausch zwischen den beiden Volumenraumbereichen stattfinden, d. h. zwischen dem Luftverteilraum einerseits und dem Nutzraum andererseits.

Gemäß einer bevorzugten Einbausituation des erfindungsgemäßen Möbelmoduls ist die Rückwand des Grundelements des Möbelmoduls parallel zu einer vom Wohnwagen, Reisemobil, Kastenwagen und/oder dergleichen bereitgestellten Außenhaut bzw. Begrenzungswand ausgerichtet. Dabei doppelt die Rückwand des Grundelements diese Außenhaut bzw. diese Begrenzungswand unter Ausbildung eines spaltförmigen Zwischenraums auf, wodurch der Luftverteilraum, d. h. der erste Volumenraumbereich ausgebildet wird. Im einbaufertigen Zustand ist das Grundelement dank des erfindungsgemäß vorgesehen Luftverteilraums mithin hinterlüftet ausgebildet.

Diese Ausgestaltung erbringt insbesondere den Vorteil, dass der vom Grundelement des Möbelmoduls bereitgestellte Nutzraum in seinen luftatmosphärischen Bedingungen bzw. Eigenschaften wahlweise verändert bzw. eingestellt werden kann. Insbesondere ist es ermöglicht, einen gezielten Luftaustausch zu realisieren und auch wahlweise eine Temperierung der im Nutzraum befindlichen Luft vorzunehmen. Das erfindungsgemäße Möbelmodul macht es mithin möglich, nicht nur einen einfachen Stauraum zur Verfügung zu stellen, sondern einen Nutzraum, der hinsichtlich seiner Luftatmosphäre den Nutzungsbedingungen entsprechend eingestellt werden kann, was das mögliche Nutzungsspektrum des Möbelmoduls in vorteilhafter Weise erweitert. Insbesondere ist es möglich, den Nutzraum des Möbelmoduls beispielsweise als Bettraum zu nutzen, und zwar auch für mehrere in Höhenrichtung übereinander angeordnete Betteinrichtungen, wie vorstehend bereits beschrieben. Dabei ist dank der erfindungsgemäßen Möglichkeit der Luftregulierung der Vorteil gegeben, dass mit Bezug auf jede vom Nutzraum aufgenommene Betteinrichtung eine gezielte Lufttemperierung oder -kühlung vorgenommen werden kann. Ferner ist ein kontinuierlicher Luftaustausch ermöglicht, was ein angenehmes Schlaf- und/oder Ruheklima ermöglicht.

Der vom Möbelmodul bereitgestellte Nutzraum kann alternativ auch als Trockenkammer genutzt werden, um davon beispielsweise aufgenommene Kleidungsstücke und/oder andere Gegenstände temperiert zu trocknen.

Die erfindungsgemäße Ausgestaltung macht es mithin möglich, einen in seinen geometrischen Abmessungen definierten Nutzraum individuell, d. h. multifunktional zu nutzen. Herstellerseitig wird mithin ein Möbelmodul zur Verfügung gestellt, das dann im späteren Verwendungsfall vom Verwender wahlweise und individuell in Benutzung genommen werden kann. Dabei ermöglicht es das erfindungsgemäße Möbelmodul konstruktiv, hinsichtlich des vom Möbelmodul bereitgestellten Nutzraums einen Luftaustausch vorzusehen, sodass der Nutzraum nicht nur als reiner Stauraum, sondern auch für andere Zwecke genutzt werden kann, insbesondere auch als Schlafbereich. Herkömmliche aus dem Stand der Technik vorbekannte Möbelmodule vermögen eine solche Nutzung nicht zu ermöglichen.

Gemäß einem weiteren Merkmal der Erfindung ist vorgesehen, dass der erste Volumenraumbereich dazu eingerichtet ist, hieran eine vom Wohnwagen, Reisemobil, Kastenwagen und/oder dergleichen bereitgestellte Klima- und/oder Heizeinrichtung strömungstechnisch anzuschließen.

Ein solcher strömungstechnischer Anschluss des ersten Volumenraumbereichs, d. h. des Luftverteilraums an eine Klima- und/oder Heizeinrichtung des Wohnwagens, des Reisemobils, des Kastenwagens und/oder dergleichen kann beispielsweise durch einen einfachen Luftführungskanal realisiert werden. Über diesen Luftführungskanal findet dann im bestimmungsgemäßen Verwendungsfall eine Beschickung des ersten Volumenraumbereichs mit entsprechend temperierter Luft statt, wobei eine Überführung dieser temperierten Luft in den Nutzraum über die in der Rückwand des Grundelements ausgebildeten Durchbrüche stattfindet. Der zweite Volumenraumbereich ist ebenso wie der Luftkanal herstellerseitig vormontiert, sodass sich eine wahlweise Verwendung des Nutzraums durch den Verwender allein darauf beschränkt, Funktionselemente innerhalb des Nutzraums wahlweise anzubringen und/oder in Verwendung zu nehmen.

Gemäß einem weiteren Merkmal der Erfindung ist vorgesehen, dass die Rückwand eine Mehrzahl von Durchtrittsöffnungen aufweist. Diese Mehrzahl an Durchtrittsöffnungen ist vorzugsweise über die Rückwand gleich verteilt ausgebildet.

Im bestimmungsgemäßen Verwendungsfall strömt durch die Durchtrittsöffnungen hindurch Luft, beispielsweise vortemperierte Luft, und zwar aus dem Luftverteilraum heraus in den Nutzraum. Um für eine gleichmäßige Luftbeaufschlagung des Nutzraums Sorge tragen zu können, sind die dafür vorgesehenen Durchtrittsöffnungen in der Rückwand über die Rückwand gleich verteilt ausgebildet. Insbesondere bei einer Verwendung des Nutzraums als Schlafraum können so die vom Schlafraum aufgenommenen Betteinrichtungen gleichermaßen insbesondere mit Frischluft und/oder vortemperierter Luft versorgt werden. In vorteilhafter Weise wird so ein Temperaturunterschied in Höhenrichtung vermieden, sodass ein angenehmes Schlafklima für sämtliche vom Nutzraum aufgenommene Betteinrichtungen geschaffen ist.

Gemäß einem weiteren Merkmal der Erfindung ist vorgesehen, dass die Rückwand und/oder die Seitenteile Aufnahmen für eine werkzeuglose montierbare Anordnung von Funktionselementen aufweisen. "Funktionselemente" in diesem Sinne können insbesondere Tragprofile, Kleiderhaken, Kleiderstangen, Tischplatten, Regalböden, Netze zur Aufbewahrung von Gegenständen und/oder dergleichen sein. Derartige Funktionselemente können verwenderseitig vorzugsweise werkzeuglos oder mittels haushaltsüblicher Werkzeuge am Grundelement, d. h. der Rückwand oder den Seitenteilen angeordnet werden, zu welchem Zweck die Rückwand und/oder die Seitenwände über entsprechende Aufnahmen verfügen. In diese Aufnahmen können die Funktionselemente werkzeuglos eingeführt bzw. eingesteckt werden. Die Funktionselemente sind zu diesem Zweck mit entsprechenden Verbindungsabschnitten ausgebildet, die jeweils korrespondierend zu den Aufnahmen des Grundelements ausgebildet sind. Verwenderseitig kann so in einfacher Weise eine Montage bzw. Demontage von Funktionselementen stattfinden, was es auch gestattet, je nach verwenderseitig gewünschtem Verwendungszweck unterschiedliche Funktionselemente wahlweise einzusetzen und auch gegeneinander auszutauschen.

Gemäß einem weiteren Merkmal der Erfindung ist vorgesehen, dass rückwandseitige Aufnahmen von in der Rückwand ausgebildeten Durchtrittsöffnungen bereitgestellt sind. Gemäß dieser besonders bevorzugten Ausführungsform dienen in der Rückwand ausgebildete Durchtrittsöffnungen zweierlei Funktionen. Zum einen können sie als Luftdurchtrittsöffnungen verwendet werden, um in schon vorbeschriebener Weise einen Luftaustausch zwischen dem Luftverteilraum einerseits und dem Nutzraum andererseits zu realisieren. Darüber hinaus dienen diese Durchtrittsöffnungen als Aufnahmen zur austauschbaren Anordnung von Funktionselementen an der Rückwand. Insofern stellen die Durchbrüche in einfacher Weise zweierlei Funktionen bereit, was die erfindungsgemäße Konstruktion insgesamt einfach und preisgünstig macht.

Gemäß einem weiteren Merkmal der Erfindung ist vorgesehen, dass eine Vielzahl von unterschiedlich ausgebildeten Funktionselementen vorgesehen ist, die nach dem Baukastenprinzip miteinander und/oder der Rückwand und/oder den Seitenteilen kombinierbar ausgebildet sind.

"Nach dem Baukastenprinzip miteinander kombinierbar" im Sinne der Erfindung meint, dass eine Vielzahl unterschiedlich ausgebildeter Funktionselemente herstellseitig zur Verfügung gestellt ist, die verwenderseitig wahlweise genutzt werden können, und zwar sowohl miteinander kombiniert als auch in Kombination mit der Rückwand und/oder den Seitenteilen. Insofern besteht die verwenderseitige Freiheit, je nach gewünschter Nutzung des vom Grundelement bereitgestellten Nutzraums Funktionselemente auszuwählen und diese lösbar an der Rückwand und/oder den Seitenteilen anzubringen. Eine solche Bestückung des Grundelements mit Funktionselementen kann verwenderseitig jederzeit geändert werden, was in schon vorbeschriebener Weise eine multifunktionale Nutzung des Möbelmoduls in vorteilhafter Weise gestattet.

Gemäß einem weiteren Merkmal der Erfindung ist vorgesehen, dass die Seitenteile jeweils plattenförmig ausgebildet sind. Es ist so eine insgesamt platzsparende Ausgestaltung der Seitenteile gegeben, bei gleichzeitig gegebener Möglichkeit, Aufnahmen in den Seitenteilen zur Anordnung von Funktionselementen vorzusehen.

Gemäß einem weiteren Merkmal der Erfindung ist vorgesehen, dass sich die Rückwand zwischen den Seitenteilen erstreckt. Auf diese Weise ist die schon vorbeschriebene u-förmige Ausgestaltung des Grundelements gegeben. Dabei stehen die Seitenteile rückseitig der Rückwand über die Rückwand ein Stück weit vor, sodass im bestimmungsgemäßen Einbaufall der als Luftverteilraum dienende erste Volumenraumbereich stirnseitig der Rückwand durch die entsprechenden Seitenteile abgedeckt ist. Ein ungewolltes seitliches Abströmen von Luft aus dem Luftverteilraum heraus ist so vermieden.

Gemäß einem weiteren Merkmal der Erfindung ist vorgesehen, dass die Seitenteile als Bestandteil anderer Möbelmodule und/oder des Wohnwagens, des Reisemobils, des Kastenwagens und/oder dergleichen ausgebildet sind. Gemäß dieser besonders bevorzugten Ausführungsform finden die Seitenteile des erfindungsgemäßen Möbelmoduls in doppelter Funktion Verwendung, zum einen als Bestandteil des erfindungsgemäßen Möbelmoduls sowie zum anderen als Bestandteil anderer Möbelmodule und/oder des Wohnwagens, des Reisemobils, des Kastenwagens und/oder dergleichen, was im Ergebnis eine besonders platzsparende Ausgestaltung des Möbelmoduls und damit effektive Nutzung des zum Einbau zur Verfügung stehenden Einbauraums gewährleistet.

Gemäß einem weiteren Merkmal der Erfindung ist vorgesehen, dass eine erste Betteinrichtung eine Matratzeneinrichtung mit einem Matratzenkörper und einer auf der Oberseite des Matratzenkörpers angeordneten Matratzenauflage aufweist, wobei der Matratzenkörper eine Mehrzahl von einzelnen und separat voneinander handhabbaren Polsterelementen aufweist, die in Längsrichtung des Matratzenkörpers in Reihe hintereinander angeordnet sind, wobei die Polsterelemente auf ihrer der Oberseite des Matratzenkörpers gegenüberliegenden Unterseite mit Abstandshaltern zur beabstandeten Anordnung der Polsterelemente auf einem Traguntergrund ausgerüstet sind.

Gemäß dieser Ausführungsform kommt eine erste Betteinrichtung zum Einsatz, die über eine Matratzeneinrichtung verfügt, welche einen Matratzenkörper einerseits und eine Matratzenauflage andererseits aufweist. Dabei ist die Matratzenauflage im bestimmungsgemäßen Verwendungsfall auf der Oberseite des Matratzenkörpers angeordnet, vorzugsweise lösbar.

Der Matratzenkörper selbst besteht aus einer Mehrzahl von einzelnen Polsterelementen, die separat voneinander handhabbar sind. Im bestimmungsgemäßen Verwendungsfall sind die Polsterelemente zur Ausbildung des Matratzenkörpers in Längsrichtung des Matratzenkörpers in Reihe hintereinander angeordnet. Die dabei zwischen den einzelnen Polsterelementen entstehenden Kontaktspalten sind durch die auf dem Matratzenkörper aufgelegten Matratzenauflage abgedeckt, sodass insgesamt eine durchgängige Liegefläche geschaffen ist. Die Matratzenauflage dient insofern nicht nur als Schutz für den Matratzenkörper, sondern stellt auch eine durchgängige und spaltenfreie ausgebildete Liegefläche sicher.

Die Polsterelemente sind mit Abstandshaltern ausgerüstet, und zwar auf ihrer der Oberseite des Matratzenkörpers gegenüberliegenden Unterseite. Diese Abstandshalter dienen im bestimmungsgemäßen Verwendungsfall dazu, die einzelnen Polsterelemente beabstandet zu einem Traguntergrund anzuordnen. Es ist so eine Unter- bzw. Hinterlüftung der Polsterelemente mit Luft ermöglicht, was es in vorteilhafter Weise gestattet, auf einen Lattenrost zur federnden Abstützung der Polsterelemente verzichten zu können. Dabei besteht gleichwohl nicht die Gefahr, dass es aufgrund eines ungewollten Feuchtigkeitseintrags zu einer unterseitigen Beschädigung der Polsterelemente durch Schimmel kommen kann. Denn die erfindungsgemäß vorgesehene Ausrüstung der Polsterelemente mit Abstandshaltern sorgt dafür, dass stets eine Unterlüftung der Polsterelemente mit dem Ergebnis stattfinden kann, dass etwaige Feuchtigkeitseinträge abtrocknen können, was eine ungewollte Schimmel- und/oder Pilzbildung vermeidet.

Die Ausgestaltung von separat voneinander handhabbaren Polsterelementen ergibt in Kombination mit den auf der Unterseite der Polsterelemente ausgebildeten Abstandshaltern zudem den synergetischen Effekt, dass die Polsterelemente auch dazu genutzt werden können, eine Sitzgruppe auszubilden. Denn die den Matratzenkörper bildenden Polsterelemente können im Bedarfsfall verwenderseitig vereinzelt und beispielsweise zur Ausbildung einer Sitzgelegenheit übereinandergestapelt werden. Dabei ist es von synergetischem Vorteil, dass es aufgrund der von den Polsterelementen bereitgestellten Abstandshaltern nicht erforderlich ist, den im Bedarfsfall durch die Polsterelemente gebildeten Matratzenkörper mit einem Lattenrost abzufangen. Dieser durch die erfindungsgemäße Ausgestaltung mögliche Entfall eines Lattenrosts macht es wiederum möglich, die ansonsten von dem Matratzenkörper genutzte Aufstellfläche in eine Sitzgelegenheit umzuwidmen, indem einfach die Polsterelemente vereinzelt und übereinandergestapelt werden. Insbesondere mit Bezug auf den eng bemessenen Wohnraum eines Wohnwagens, Reisemobils, Kastenwagens und/oder dergleichen ist diese Ausgestaltung von Vorteil.

Gemäß einem weiteren Merkmal der Erfindung ist vorgesehen, dass eine zweite Betteinrichtung zwei sich in Längsrichtung des Grundelements erstreckende Tragprofile aufweist, die jeweils teleskopierbar ausgebildet sind.

Gemäß dieser Ausgestaltung kommt eine zur ersten Betteinrichtung konstruktiv anders ausgestaltete, zweite Betteinrichtung zum Einsatz. Diese zweite Betteinrichtung verfügt über Tragprofile, die sich im endmontierten Zustand in Längsrichtung des Grundelements erstrecken. Diese Tragprofile nehmen im endmontierten Zustand einen Lattenrost sowie eine Bettmatratze auf.

Die Tragprofile sind jeweils teleskopierbar ausgebildet, was in vorteilhafter Weise eine verwenderseitig werkzeuglose Montage gestattet. Im endmontierten Zustand greift ein Tragprofil einendseitig in dafür vorgesehene Aufnahmen des Grundelements ein, wodurch eine Abstützung des Tragprofils durch das Grundelement gegeben ist. Dabei kann das Tragprofil in die jeweiligen Aufnahmen verwenderseitig in einfacher Weise dadurch eingeführt werden, dass es teleskopierbar auseinander verfahren wird, infolgedessen es jeweils endseitig in die zugehörigen Aufnahmen des Grundelements eintaucht. Im Falle einer Demontage ist das Tragprofil teleskopartig wieder zusammenzuschieben, infolgedessen es aus den zugehörigen Aufnahmen des Grundelements wieder herausgeführt wird.

Für eine positionssichere Anordnung eines Tragprofils am Grundelement ist gemäß einem weiteren Merkmal der Erfindung vorgesehen, dass ein Tragprofil eine Arretiereinrichtung aufweist, die dazu eingerichtet ist, teleskopierbar zueinander verfahrbar ausgebildete Abschnitte des Tragprofils in ihrer Verfahrbarkeit zu sperren. Gemäß dieser Ausführungsform kann eine vom Verwender werkzeuglos zu betätigende Arretiereinrichtung vorgesehen sein, die im Betätigungsfall dafür sorgt, dass die an sich teleskopierbar zueinander verfahrbaren Abschnitte des Tragprofils in ihrer Verfahrbewegung gesperrt sind. Eine ungewollte Demontage des Tragprofils ist mithin vermieden, sodass das Tragprofil auch nicht in unbeabsichtigter Weise aus den jeweiligen Aufnahmen des Grundelements herausgeführt werden kann.

Gemäß einem weiteren Merkmal der Erfindung ist vorgesehen, dass die Seitenteile des Grundelements die Aufnahmen aufweisen, die dazu eingerichtet sind, ein Tragprofil einendseitig aufzunehmen. Gemäß dieser bevorzugten Ausführungsform der Erfindung verfügt das Grundelement in schon vorbeschriebener Weise über eine Rückwand und zwei sich daran anschließende Seitenteile. Im endmontierten Zustand erstreckt sich eine Betteinrichtung in Längsrichtung der Rückwand, weshalb die beiden von einer Betteinrichtung bereitgestellten Tragprofile einendseitig wie anderendseitig an den Seitenteilen des Grundelements angeordnet sind. Um eine einfache und werkzeuglose Montage zu ermöglichen, verfügen die Seitenteile über Aufnahmen, in die die Tragprofile jeweils einendseitig im endmontierten Zustand eingesetzt sind.

Gemäß einem weiteren Merkmal der Erfindung ist vorgesehen, dass ein Tragprofil mit einer Absturzsicherung ausgerüstet ist. Eine in einer Betteinrichtung im bestimmungsgemäßen Verwendungsfall liegende Person wird so vor einem unbeabsichtigten Herausfallen aus der Betteinrichtung geschützt. Dabei kann die Absturzsicherung vorzugsweise auch lösbar am Tragprofil angeordnet sein, was eine individuelle Verwendung ermöglicht. Die Absturzsicherung kann aber auch dauerhaft am Tragprofil montiert sein, um eine ungewollte Demontage durch eine in der Betteinrichtung liegende Person zu verhindern.

Gemäß einem weiteren Merkmal der Erfindung ist vorgesehen, dass die zweite Betteinrichtung ein Rolllattenrost aufweist, der im endmontierten Zustand von zwei zwischen zwei Seitenteilen des Grundelements angeordneten Tragprofilen abgestützt ist. Die Ausgestaltung des Lattenrosts als Rolllattenrosts hat insbesondere den Vorteil einer vereinfachten Verstauung im Nichtbenutzungsfall. Es ist so insbesondere die Möglichkeit gegeben, eine zweite Betteinrichtung auch nur temporär zu demontieren, beispielsweise für einen Gebrauch des vom Grundelement bereitgestellten Nutzraums als Stauraum tagsüber. Für die nächtliche Nutzung als Schlafkoje kann der Nutzraum dann in schon vorbeschriebener Weise mit einer Betteinrichtung ausgestattet werden, wozu zunächst einmal die Tragprofile in den Nutzraum einzubringen und alsdann mit einem Lattenrost zu belegen sind.

Gemäß einem weiteren Merkmal der Erfindung ist ein mit Trittausnehmungen ausgebildetes Plattenelement vorgesehen, das für eine verwenderseitig wahlweise Anordnung in Höhen- oder Längsausrichtung des Grundelements am Grundelement ausgebildet ist.

Dieses mit Trittausnehmungen ausgebildete Plattenelemente kann als Leiter Verwendung finden, insbesondere für eine vereinfachte Inbenutzungnahme einer in Höhenrichtung oberen Betteinrichtung. In diesem Fall ist das Plattenelement in Höhenausrichtung des Grundelements ausgebildet, d. h. ausgerichtet.

Alternativ hierzu kann das Plattenelement auch um 90 ° verdreht Verwendung finden, d. h. in Längsausrichtung des Grundelements. In dieser Positionierung des Plattenelements kann es für einen frontseitigen Verschluss des vom Grundelement bereitgestellten Nutzraums Sorge tragen. Dies ist insbesondere dann erwünscht, wenn der vom Grundelement bereitgestellte Nutzraum zumindest auch zum Teil als Stauraum Verwendung finden soll, da in diesem Fall das längs ausgerichtete Plattenelement dafür sorgt, dass vom Stauraum aufgenommene Gegenstände nicht ungewollt frontseitig aus dem Nutzraum herausbewegt bzw. herauswandern können, was insbesondere während einer Fahrt des Wohnwagens, des Reisemobils, des Kastenwagens und/oder dergleichen von Vorteil ist.

Mit der Erfindung wird insgesamt ein Möbelmodul für den Einbau in einen Wohnwagen, ein Reisemobil, einen Kastenwagen und/oder dergleichen vorgeschlagen, welches einem Verwender ermöglicht, dass es hinsichtlich seiner Nutzung an individuelle Bedürfnisse anpassbar ist, und dies, ohne den Vorteil der vorgefertigten und einbaufertigen Modulbauweise zu verlieren. Ferner ist mit der erfindungsgemäßen Ausgestaltung erreicht, dass eine individuelle Anpassbarkeit auch ohne eine intensive manuelle Fertigung erreicht ist. Dabei weist das erfindungsgemäße Möbelmodul auch bei einer individuellen Ausgestaltung eine ausreichende Eigenstabilität auf und es ist gleichsam erreicht, dass die Anpassbarkeit des Möbelmoduls auch über die Nutzungszeit des Wohnwagens bzw. Reisemobils an die Nutzungsbedürfnisse des Nutzers anpassbar ist. Eine verwenderseitig einmal gewählte individuelle Ausgestaltung des Möbelmoduls kann mithin verändert werden, sodass in Entsprechung unter Umständen geänderter Lebensbedürfnisse eine Anpassung ermöglicht ist.

Die vorbeschriebenen Vorteile werden insbesondere dadurch erreicht, dass der vom Grundelement bereitgestellte Nutzraum individuell verwendbar ist, wobei eine Mehrzahl von Betteinrichtungen zur Unterbringung im Nutzraum vorgesehen ist, welche Betteinrichtungen verwenderseitig nach dem Baukastenprinzip wahlweise miteinander kombinierbar ausgebildet sind und welche Betteinrichtungen mit Mittel ausgerüstet sind, die dazu eingerichtet sind, die Betteinrichtungen verwenderseitig werkzeuglos am Grundelement lösbar, gleichwohl aber positionssicher anzuordnen. Die vorerläuterten Vorteile werden ferner dadurch erreicht, dass zwei voneinander getrennte Volumenraumbereiche vorgesehen sind, die in strömungstechnischer Wirkverbindung miteinander stehen. Denn insbesondere aufgrund dieser strömungstechnischen Wirkverbindung ist eine völlig freie und individuelle Nutzung gestattet, mithin auch eine solche, die die Verwendung des Nutzraums als Schlafkoje unterstützt. Denn insbesondere bei der Ausgestaltung des Nutzraums als Schlafkoje ist eine Frischluftzufuhr für eine wünschenswerterweise zu erzielende komfortable Nutzung von Bedeutung.

Die vorerläuterten Vorteile werden ferner dadurch unterstützt, dass das Möbelmodul über Betteinrichtungen verfügt, die in vorbeschriebener Weise entweder über Matratzenkörper mit Abstandshaltern oder über Tragprofile verfügen. Denn diese Ausgestaltung der Betteinrichtungen gestattet es, den Nutzraum des Möbelmoduls in vorbeschriebener Weise individuell zu nutzen, sei es, einzelne Betteinrichtungen wahlweise miteinander zu kombinieren, oder Betteinrichtungen verwenderseitig auch nicht zu installieren, sodass für andere Zwecke ein zusätzlicher Stauraum gegeben ist, was die individualisierte Nutzung des Nutzraums zusätzlich unterstützt.

Mit der Erfindung wird ferner ein Wohnwagen, ein Reisemobil, ein Kastenwagen und/oder dergleichen vorgeschlagen, ausgerüstet mit einem Möbelmodul der erfindungsgemäßen Art. Ein solcher Wohnwagen, ein solches Reisemobil, ein solcher Kastenwagen und/oder dergleichen verfügt über die schon vorbeschriebenen Vorteile.

Weitere Merkmale und Vorteile ergeben sich aus der nachfolgenden Beschreibung anhand der Figuren. Dabei zeigen
- Fig. 1: in schematischer Perspektivansicht ein erfindungsgemäßes Möbelmodul gemäß einer ersten Ausführungsform;
- Fig. 2: in schematischer Seitenansicht das Möbelmodul nach Fig. 1;
- Fig. 3: in schematischer Perspektivansicht ein erfindungsgemäßes Möbelmodul gemäß einer weiteren Ausführungsform;
- Fig. 4: in schematischer Seitenansicht das Möbelmodul nach Fig. 3;
- Fig. 5: in schematischer Perspektivansicht ein erfindungsgemäßes Möbelmodul gemäß einer weiteren Ausführungsform;
- Fig. 6: in schematischer Seitenansicht das Möbelmodul nach Fig. 5;
- Fig. 7: in schematischer Perspektivansicht ein erfindungsgemäßes Möbelmodul gemäß einer weiteren Ausführungsform;
- Fig. 8: in schematischer Seitenansicht das Möbelmodul nach Fig. 7;
- Fig. 9: in schematischer Perspektivansicht ein erfindungsgemäßes Möbelmodul gemäß einer weiteren Ausführungsform;
- Fig. 10: in schematischer Seitenansicht das Möbelmodul nach Fig. 9;
- Fig. 11: in schematischer Perspektivansicht ein erfindungsgemäßes Möbelmodul gemäß einer weiteren Ausführungsform;
- Fig. 12: in schematischer Seitenansicht das Möbelmodul nach Fig. 11;
- Fig. 13: in schematischer Perspektivansicht ein erfindungsgemäßes Möbelmodul gemäß einer weiteren Ausführungsform;
- Fig. 14: in schematischer Seitenansicht das Möbelmodul nach Fig. 13;
- Fig. 15: in schematischer Perspektivansicht ein erfindungsgemäßes Möbelmodul gemäß einer weiteren Ausführungsform;
- Fig. 16: in schematischer Seitenansicht das Möbelmodul nach Fig. 15;
- Fig. 17: in schematischer Perspektivansicht ein erfindungsgemäßes Möbelmodul gemäß einer weiteren Ausführungsform;
- Fig. 18: in schematischer Seitenansicht das Möbelmodul nach Fig. 17;
- Fig. 19: in schematischer Perspektivansicht eine zweite Betteinrichtung;
- Fig. 20: in schematischer Perspektivansicht ein Tragprofil einer zweiten Betteinrichtung;
- Fig. 21: in schematischer Perspektivansicht das Tragprofil nach Fig. 20 mit einer Absturzsicherung;
- Fig. 22: in schematischer Explosionsdarstellung die zweite Betteinrichtung nach Fig. 19;
- Fig. 23: in schematischer Perspektivansicht ein Polsterelement;
- Fig. 24: in einer schematischen Draufsicht von unten das Polsterelement nach Fig. 23 und
- Fig. 25: in schematischer Seitenansicht das Polsterelement nach Fig. 23.

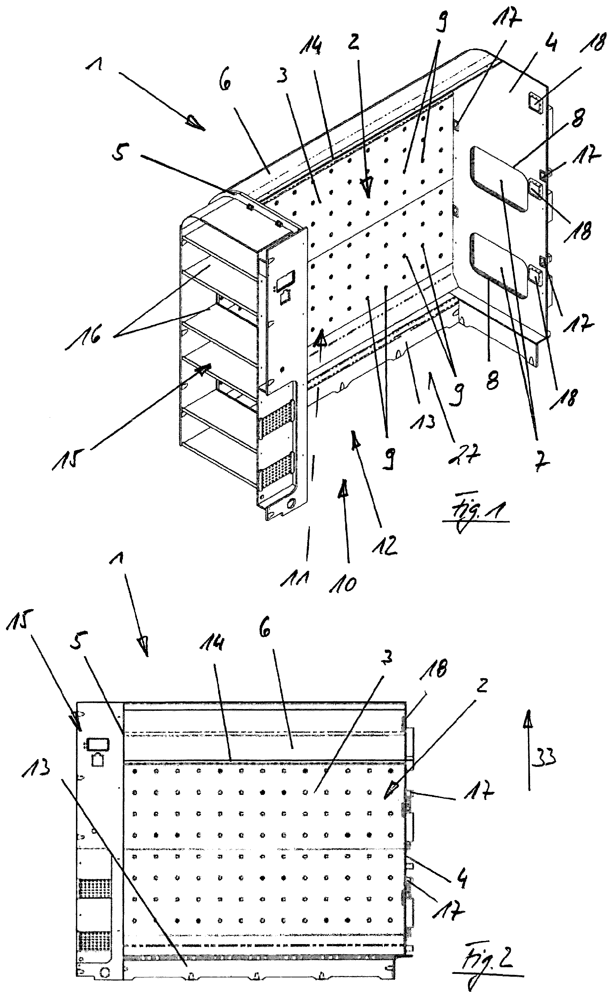

Fig. 1 lässt in schematischer Perspektivansicht ein erfindungsgemäßes Möbelmodul 1 erkennen. Dieses ist für den Einbau in einen Wohnwagen, ein Reisemobil, einen Kastenwagen und/oder dergleichen bestimmt. Fig. 2 zeigt das Möbelmodul 1 in einer schematischen Seitenansicht.

Wie sich aus einer Zusammenschau der Fig. 1 und 2 ergibt, verfügt das Möbelmodul 1 über ein im Querschnitt u-förmig ausgebildetes Grundelement 2. Dieses Grundelement 2 weist eine Rückwand 3 sowie zwei sich daran anschließende Seitenteile 4 und 5 auf. In ihrer Kombination bilden die Rückwand 3 und die Seitenteile 4 und 5 die im Querschnitt u-förmige Ausgestaltung des Grundelements 2.

Das Grundelement 2 ist in seinen geometrischen Abmessungen einen vom Wohnwagen, Reisemobil, Kastenwagen und/oder dergleichen bereitgestellten Einbauraum ausnutzend ausgebildet. Im gezeigten Ausführungsbeispiel ist das Grundelement 2 dazu ausgerüstet, im Heckbereich eines Wohnwagens, Reisemobils, Kastenwagens und/oder dergleichen positioniert zu werden, und zwar quer zur üblichen Fahrtrichtung. Im eingebauten Zustand doppelt die Rückwand 3 des Grundelements 2 deshalb eine vom Wohnwagen, Reisemobil, Kastenwagen und/oder dergleichen bereitgestellte heckseitige Wand 6 auf, wie sich dies insbesondere aus der Darstellung nach Fig. 1 ergibt.

Das Grundelement 2 des Möbelmoduls 1 definiert einen Volumenraum 10, der vom Grundelement 2 umschlossen, d. h. bereitgestellt ist. Dabei ist die Rückwand 3 des Grundelements 2 in Relation zu den Seitenteilen 4 und 5 derart ausgerichtet, dass der vom Grundelement 2 bereitgestellte Volumenraum 10 mittels der Rückwand 3 unterteilt ist, und zwar in einen ersten, als Luftverteilraum dienenden Volumenraumbereich 11 einerseits und einen zweiten, als Nutzraum dienenden Volumenraumbereich 12 andererseits. Dabei befindet sich der als Luftverteilraum dienende Volumenraumbereich 11 zwischen der Rückwand 3 des Grundelements 2 und der vom Wohnwagen, dem Reisemobil, dem Kastenwagen und/oder dergleichen bereitgestellten heckseitigen Wand 6. Die konstruktive Ausgestaltung des Grundelements 2 sorgt mithin in schon vorbeschriebener Weise für eine Aufdopplung der vom Wohnwagen, dem Reisemobil, dem Kastenwagen und/oder dergleichen bereitgestellten Wand 6 durch die Rückwand 3 des Grundelements 2, wobei aufgrund der beabstandeten Anordnung der Rückwand 3 zur Wand 6 ein Spaltraum entsteht, der als Volumenraumbereich 11 der Luftverteilung dient.

Wie sich aus einer Zusammenschau der Fig. 1 und 2 ferner ergibt, weist die Rückwand 3 für eine strömungstechnische Verbindung der beiden Volumenraumbereiche 11 und 12 eine Mehrzahl von Durchtrittsöffnungen 9 auf, die über die Rückwand 3 gleich verteilt ausgebildet sind. Mittels der von der Rückwand 3 bereitgestellten Durchtrittsöffnungen 9 kann mithin ein Luftaustausch zwischen dem eigentlichen Nutzraum 12 des Grundelements 2 einerseits und dem zwischen der Rückwand 3 des Grundelements 2 und der vom Wohnwagen, dem Reisemobil, dem Kastenwagen und/oder dergleichen bereitgestellten Wand 6 ausgebildeten Luftverteilraum 11 andererseits stattfinden.

Der erste Volumenraumbereich, d. h. der Luftverteilraum 11 ist dazu eingerichtet, hieran eine vom Wohnwagen, Reisemobil, Kastenwagen und/oder dergleichen bereitgestellte Klima- und/oder Heizeinrichtung strömungstechnisch anzuschließen. Zu diesem Zweck ist ein Luftkanal 13 vorgesehen, der an den Luftverteilraum 11 strömungstechnisch angeschlossen ist. Es kann so im bestimmungsgemäßen Verwendungsfall eine Hinterlüftung der Rückwand 3 des Grundelements 2 stattfinden, wobei die in den Luftverteilraum 11 eingebrachte, beispielsweise erwärmte Luft, über die in der Rückwand 3 ausgebildeten Durchtrittsöffnungen 9 in den vom Grundelement 2 bereitgestellten Nutzraum 12 überführt werden kann. Dabei ermöglicht die gleich verteilte Anordnung der Durchtrittsöffnungen 9 eine gleichmäßig verteilte Lufteinbringung in den Nutzraum 12, was insbesondere dann von Vorteil ist, wenn der Nutzraum 12 der Aufnahme einer Mehrzahl von Betteinrichtungen dient, wie dies im Weiteren noch näher beschrieben werden wird.

Im gezeigten Ausführungsbeispiel erstreckt sich die Rückwand 3 in Höhenrichtung 33 nicht über die gesamte Höhenerstreckung der vom Wohnwagen, Reisemobil, Kastenwagen und/oder dergleichen bereitgestellten Wand 6. Dies deshalb nicht, weil die Wand 6 im in Höhenrichtung oberen Teilbereich gekrümmt ausgebildet ist, wie dies insbesondere die Darstellung nach Fig. 1 erkennen lässt. Um einen möglichst einfachen Aufbau des Grundelements 2 zu realisieren und damit auch zu ermöglichen, dass das Grundelement 2 nicht nur in einem Heckbereich eines Wohnwagens, eines Reisemobils, eines Kastenwagens und/oder dergleichen Verwendung finden kann, erstreckt sich die Rückwand 3 des Grundelements 2 nur über den krümmungsfrei ausgebildeten Abschnitt der Wand 6. In diesem nichtgekrümmten Bereich der Wand 6 doppelt die Rückwand 3 die Wand 6 in schon vorbeschriebener Weise unter Belassung eines Luftverteilraums 11 auf, wobei der obere Abschluss zum Verschluss des Luftverteilraums 11 durch eine Abdeckung 14 gebildet ist, wie dies aus Fig. 2 ersichtlich ist.

Die Seitenteile 4 und 5 können je nach Einbausituation des Grundelements 2 als Bestandteil anderer Möbelmodule 15 ausgebildet sein und/oder andere Wände des Wohnwagens, des Reisemobils, des Kastenwagens und/oder dergleichen zumindest teilweise aufdoppeln. Im gezeigten Ausführungsbeispiel ist das in Blickrichtung auf Fig. 2 linke Seitenteil 5 als Bestandteil eines weiteren Möbelmoduls 15 ausgebildet, bei welchem Möbelmodul 15 es sich um ein mehrere Regalfächer 16 bereitstellendes Regal handelt.

Das mit Bezug auf die Blickrichtung nach Fig. 2 rechte Seitenteil 4 doppelt indes die zugehörige und in den Figuren nicht näher dargestellte Seitenwand des Wohnwagens, des Reisemobils, des Kastenwagens und/oder dergleichen auf. Dabei verfügt diese Seitenwand des Wohnwagens, des Reisemobils, des Kastenwagens und/oder dergleichen über Fenster 7, weshalb das Seitenteil 4 mit entsprechenden Ausschnitten 8 ausgerüstet ist, wie dies insbesondere die Darstellung nach Fig. 1 erkennen lässt.

Das mit Bezug auf die Zeichnungsebene nach Fig. 2 rechte Seitenteil 4 verfügt des Weiteren über Lichteinrichtungen 18, die verwenderseitig zur Erhellung des Nutzraums 12 wahlweise ein- bzw. ausgeschaltet werden können. Es sind dabei in Höhenrichtung 33 drei übereinander angeordnete Lichteinrichtungen 18 vorgesehen, weil der vom Grundelement 2 bereitgestellte Nutzraum 12 insbesondere dazu dienen kann, drei in Höhenrichtung 33 übereinander angeordnete Betteinrichtung 30, 31 und 32 aufzunehmen, was anhand der weiteren Figuren noch näher beschrieben werden wird.

Die Rückwand 3 und/oder die Seitenteile 4 und 5 weisen für eine werkzeuglose montierbare Anordnung von Funktionselementen Aufnahmen 17 auf, wie dies die Darstellung nach Fig. 1 insbesondere anhand des rechten Seitenteils 4 erkennen lässt. Das Seitenteil 5 ist in entsprechender Weise ausgebildet.

Die von der Rückwand 3 bereitgestellten Durchbrüche 9 erfüllen gemäß dem hier gezeigten Ausführungsbeispiele eine Doppelfunktion. Sie dienen zum einen in schon vorbeschriebener Weise dafür, einen Luftaustausch zwischen dem Luftverteilraum 11 einerseits und dem Nutzraum 12 andererseits zu ermöglichen. Zudem können sie als Aufnahmen 17 genutzt werden, um Funktionselemente werkzeuglos montierbar an der Rückwand 3 anzuordnen.

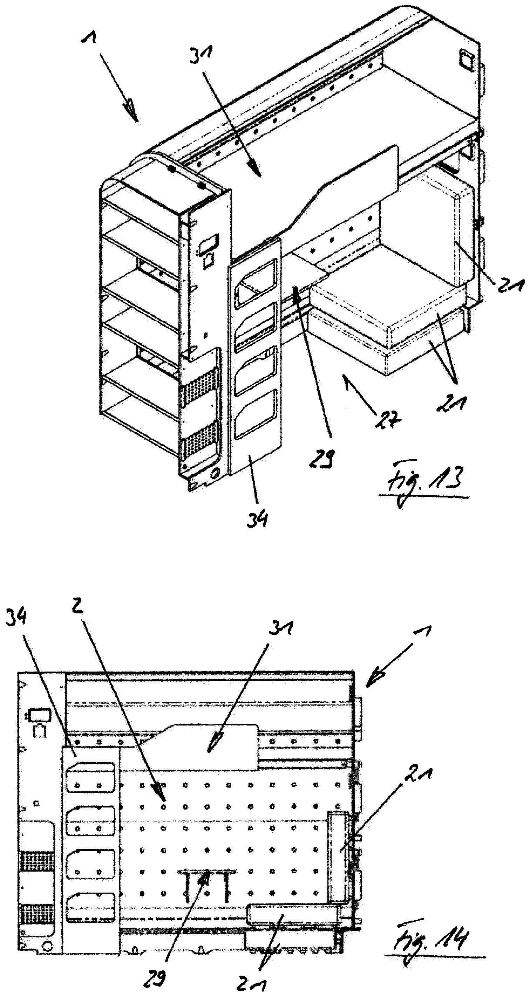

Gemäß einem besonders bevorzugten Ausführungsbeispiel der Erfindung ist eine Vielzahl von unterschiedlich ausgebildeten Funktionselementen vorgesehen, die nach dem Baukastenprinzip miteinander und/oder der Rückwand 3 und/oder den Seitenteilen 4 und 5 kombinierbar ausgebildet sind. "Nach dem Baukastenprinzip" im Sinne der Erfindung bedeutet, dass eine Mehrzahl von unterschiedlichen Funktionselementen bereitgestellt ist, die vom Verwender wahlweise genutzt werden können, indem er sie in bestimmungsgemäßer Weise entweder miteinander kombiniert und/oder in den dafür vorgesehenen Aufnahmen 17 der Rückwand 3 und/oder den Seitenteile 4 und 5 anordnet, beispielsweise durch Einhängen, Einstecken und/oder Einführen. "Funktionselemente" in diesem Sinne können insbesondere Tragprofile 39, Hakenelemente, Tische 29 (vgl. Fig. 13 und 14) und/oder vieles mehr sein. Die nach dem Baukastenprinzip variable verwenderseitige Verwendung von unterschiedlichen Funktionselementen gestattet es, den vom Möbelmodul 1 bereitgestellten Nutzraum 12 multifunktional zu verwenden.

Mit dem erfindungsgemäßen Möbelmodul 1 wird mithin herstellerseitig ein in seinen Abmessungen definierter Nutzraum 12 bereitgestellt. Dieser Nutzraum 12 kann dann im Verwendungsfall von einem Verwender nach seinen persönlichen Vorlieben wahlweise benutzt werden, zu welchem Zweck eine Mehrzahl von unterschiedlich ausgebildeten Funktionselementen zur Verfügung steht. Diese können dann vom Verwender nach Belieben eingesetzt werden, wobei konstruktionsbedingt eine einfache Montage dieser Funktionselemente deshalb erreicht ist, weil verwenderseitig eine werkzeuglose Montage bzw. Demontage vorgenommen werden kann.

Dabei zeichnet sich das erfindungsgemäße Möbelmodul 1 unter anderem dadurch aus, dass in schon vorbeschriebener Weise über den Luftverteilraum 11 eine Belüftung des Nutzraums 12 erfolgen kann, was es gestattet, einerseits für eine entsprechende Belüftung des Nutzraums 12 und andererseits für eine Gleichtemperierung des Nutzraums 12 Sorge zu tragen. Der Nutzraum 12 kann mithin nicht nur als bloßer Stauraum genutzt werden, sondern es können hier, wie dies im Weiteren auch noch näher beschrieben werden wird, Betteinrichtungen installiert, Sitzgelegenheiten geschaffen, Arbeitsplätze eingerichtet, Trockenräume geschaffen und/oder dergleichen ausgebildet werden. Entscheidend ist mithin, dass durch das Möbelmodul ein multifunktionaler Nutzraum einerseits geschaffen wird und das andererseits auch die Möglichkeit der Belüftung und Temperierung gegeben ist, sodass auch je nach Wahl des Verwenders eine adäquate Raumbedingung für eine bestimmungsgemäße Nutzung ausgebildet werden kann.

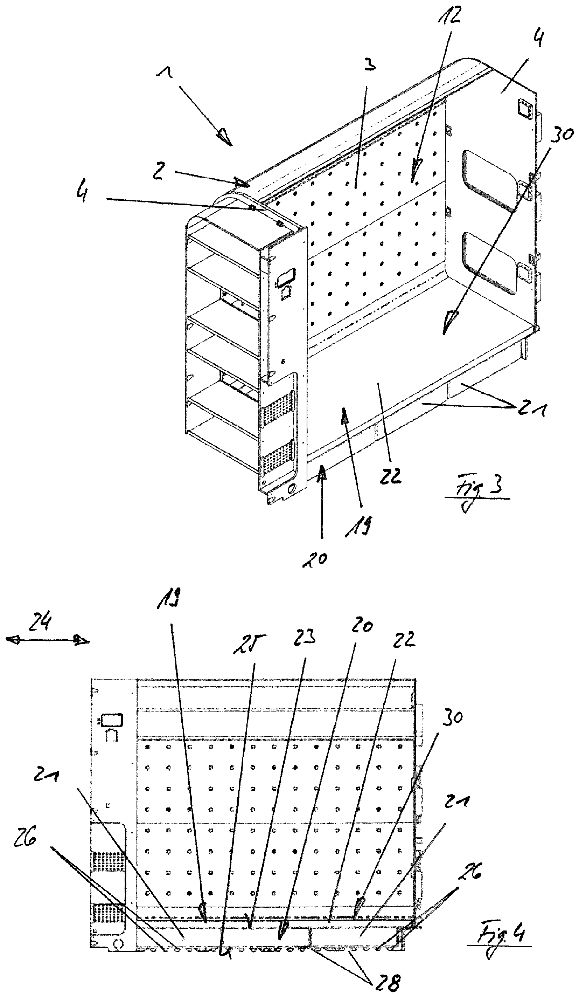

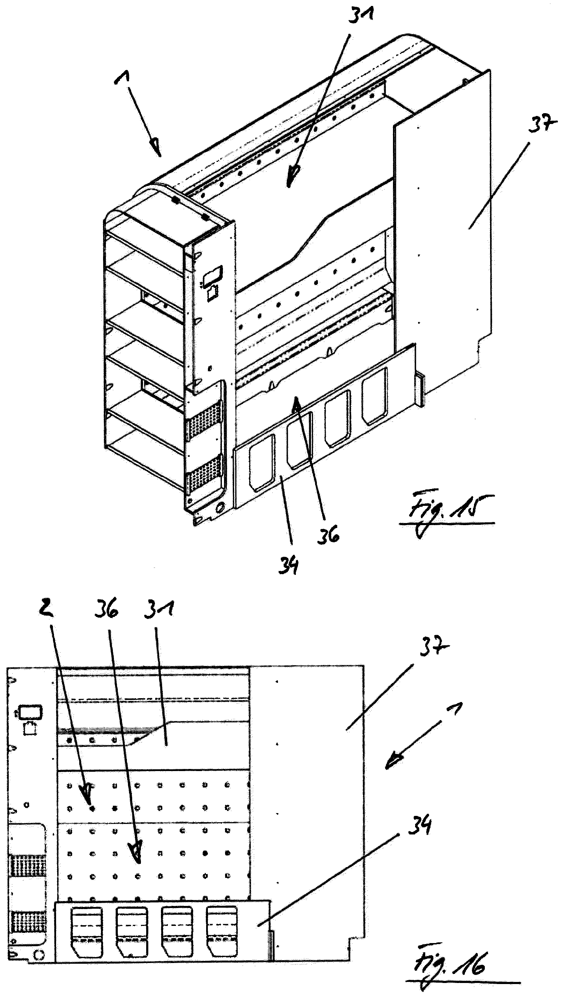

Gemäß einem besonderen Ausführungsbeispiel dient der vom Grundelement 2 des Möbelmoduls 1 bereitgestellte Nutzraum 12 der Unterbringung einer Mehrzahl von Betteinrichtungen 30, 31 und 32, wie dies die Fig. 3 bis 18 anhand einer Mehrzahl von Ausführungsformen in unterschiedlichen Ansichten zeigen.

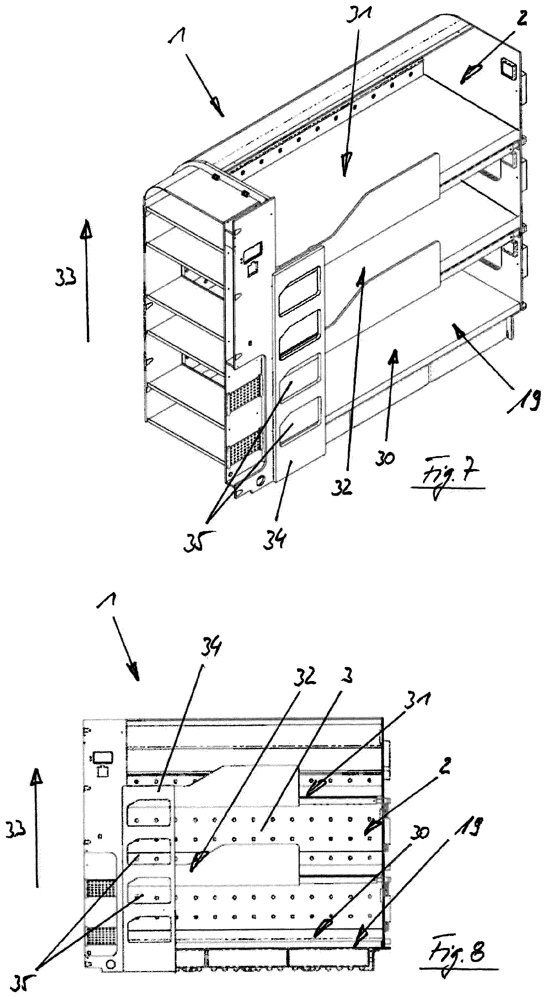

Im gezeigten Ausführungsbeispiel lässt sich der Nutzraum 12 mit bis zu drei Betteinrichtungen 30, 31 und 32 bestücken. Dabei sind bei einer Vollbestückung des Nutzraums 12 mit Betteinrichtungen 30, 31 und 32 die Betteinrichtungen 30, 31 und 32 in Höhenrichtung 33 übereinander angeordnet, wie dies beispielsweise Fig. 7 erkennen lässt.

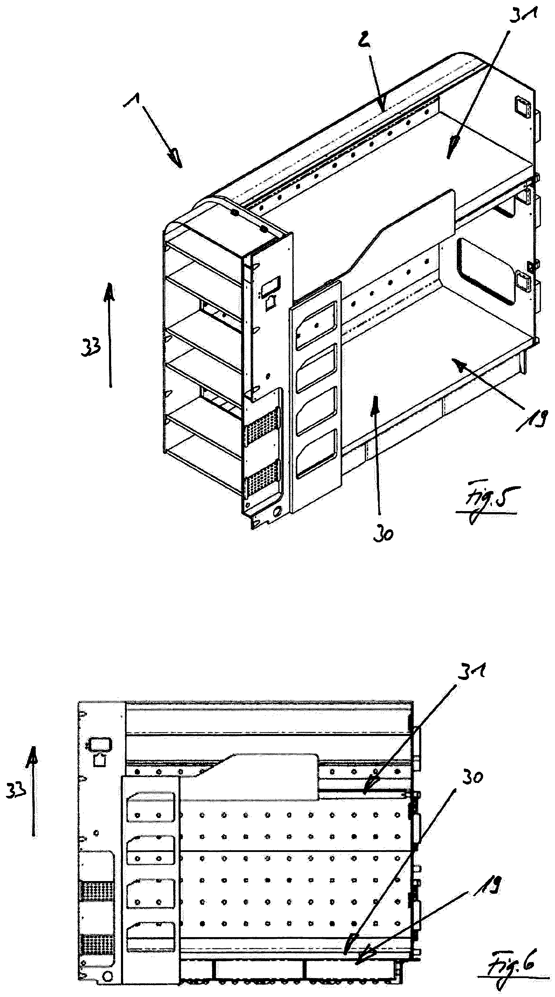

Von Bedeutung ist in diesem Zusammenhang, dass die Betteinrichtungen 30, 31 und 32 verwenderseitig nach dem Baukastenprinzip wahlweise miteinander kombinierbar ausgebildet und mit Mitteln ausgestattet sind, die dazu eingerichtet sind, die Betteinrichtungen 30, 31 und 32 verwenderseitig werkzeuglos am Grundelement 2 lösbar, gleichwohl aber positionssicher anzuordnen. Verwenderseitig besteht mithin die Wahl, ob eine Bestückung des Nutzraums 12 mit Betteinrichtungen 30, 31 und 32 stattfindet, und wenn ja, mit wie vielen Betteinrichtungen 30, 31 und 32. Verwenderseitig kann mithin nur eine erste Betteinrichtung 30 vorgesehen sein, wie in den Fig. 3 und 4 gezeigt, oder zwei Betteinrichtungen 30 und 31, wie in den Fig. 5 und 6 gezeigt, oder drei Betteinrichtungen 30, 31 und 32, wie in den Fig. 7 und 8 gezeigt.

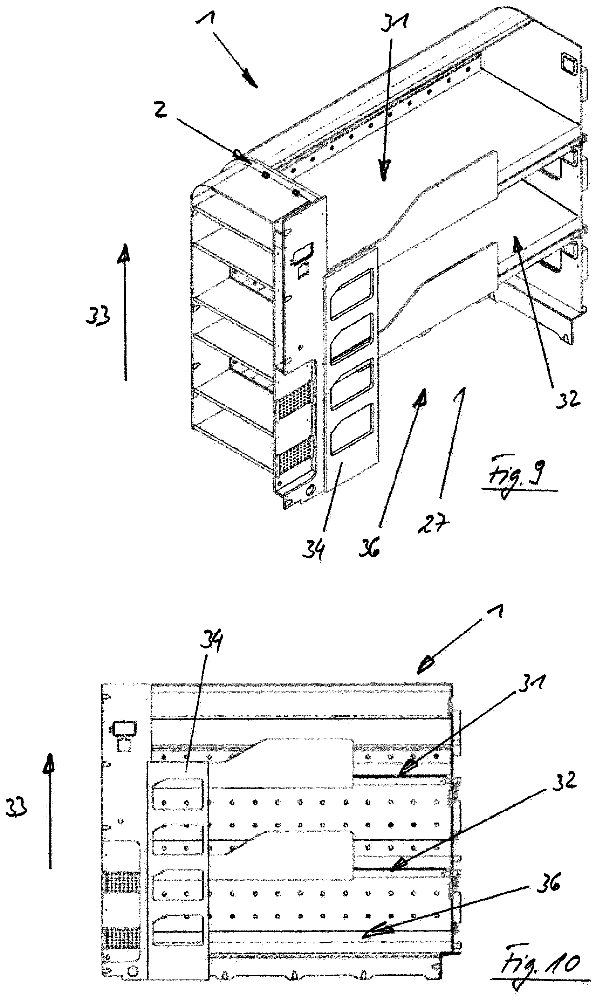

Dabei hat der Verwender ferner die Wahl, in welcher Ausgestaltung oder Reihenfolge von ihm ausgewählte Betteinrichtungen 30, 31 und 32 installiert sind. So zeigen beispielsweise die Fig. 9 bis 12 eine Anordnung, wonach die zweite Betteinrichtung 31 und die dritte Betteinrichtung 32 montiert sind, die erste Betteinrichtung 30 indes demontiert ist, womit in Höhenrichtung 33 unterhalb der dritten Betteinrichtung 32 ein Stauraum 36 entsteht.

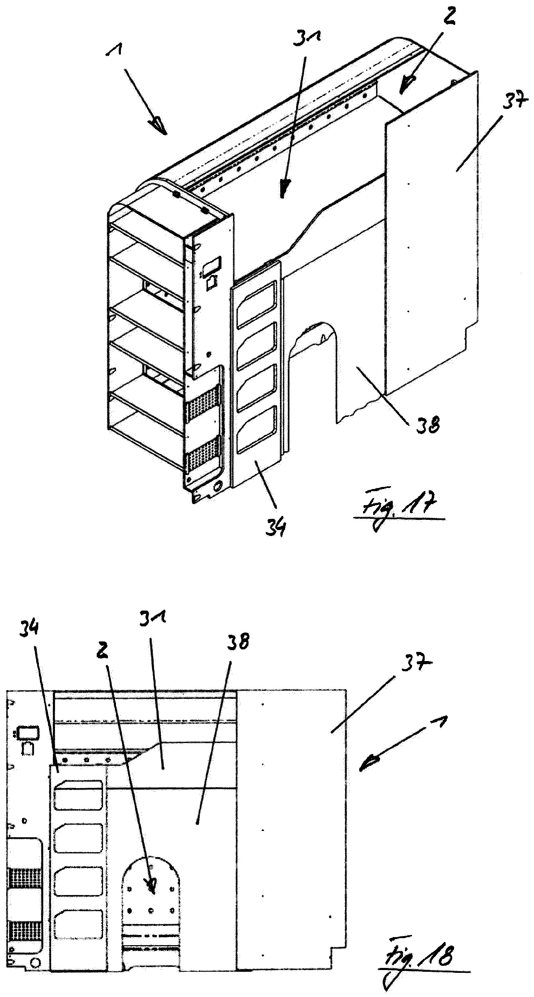

Die Fig. 13 bis 16 zeigen indes eine Ausführungsform, wonach nur die in Höhenrichtung 33 obere, zweite Betteinrichtung 31 montiert ist. Dementsprechend fällt der Stauraum 36 unterhalb dieser Betteinrichtung 31 entsprechend groß aus, sodass der Stauraum 36 in diesem Fall als Arbeitsplatz genutzt werden kann. Gemäß einer anderen Konstellation kann dieser Stauraum 36 auch als "Kinderspielhöhle" genutzt werden, wobei es in diesem Fall bevorzugt ist, den frontseitigen Zugang des Stauraums 36 mit einem Vorhang 38 zu verschließen, wie dies die Fig. 17 und 18 erkennen lassen.

All die beispielhaft vorbeschriebenen Ausgestaltungsformen lassen sich verwenderseitig in einfacher Weise je nach Bedarf ausbilden, da die Betteinrichtungen 30, 31 und 32 jeweils werkzeuglos am Grundelement 2 des Möbelmoduls 1 angeordnet werden können. Dabei ist die Anordnung der Betteinrichtungen 30, 31 und 32 lösbar, gleichwohl aber positionssicher ausgebildet, womit einerseits eine sichere Verwendung gestattet ist, andererseits aber auch in einfacher Weise im Bedarfsfall eine Demontage stattfinden kann.

Wie insbesondere die Fig. 3 und 4 erkennen lassen, ist eine erste Betteinrichtung 30 vorgesehen, die über eine Matratzeneinrichtung 19 verfügt. Im endmontierten Zustand liegt diese Matratzeneinrichtung 19 direkt, d. h. ohne Zwischenordnung eines Lattenrosts auf dem vom Wohnwagen, Reisemobil, Kastenwagen und/oder dergleichen bereitgestellten Traguntergrund 27 auf.

Die Matratzeneinrichtung 19 verfügt über einen Matratzenkörper 20 und eine Matratzenauflage 22. Dabei ist die Matratzenauflage 22 auf der Oberseite 23 des Matratzenkörpers 20 angeordnet.

Der Matratzenkörper 20 weist eine Mehrzahl von einzelnen und separat voneinander handhabbaren Polsterelementen 21 auf, die in Längsrichtung 24 des Matratzenkörpers 20 in Reihe hintereinander angeordnet sind, wie dies beispielsweise die Fig. 3 und 4 erkennen lassen. Dabei sind die Polsterelemente 21 auf ihrer der Oberseite 23 des Matratzenkörpers 20 gegenüberliegenden Unterseite 25 mit Abstandshaltern 26 ausgerüstet. Diese Abstandshalter 26 dienen einer beabstandeten Anordnung der Polsterelemente 21 auf dem Traguntergrund 27.

Gemäß einer besonders bevorzugten Ausführungsform der Erfindung sind die Abstandshalter 26 von einem Formvlies bereitgestellt, das auf die Unterseite 25 der Polsterelemente 21 aufkaschiert ist.

Die Abstandshalter 26 bilden zwischen sich einen Volumenraum 28 aus, womit eine Unterlüftung der Polsterelemente 21 und somit auch eine Unterlüftung des Matratzenkörpers 20 sichergestellt ist. Für eine stabile Abstützung des Matratzenkörpers 20 gegenüber dem Traguntergrund 27 sowie für eine möglichst vollständige Hinterlüftung des Matratzenkörpers 20 sind die von den Polsterelementen 21 unterseitig bereitgestellten Abstandshalter 26 gleich verteilt ausgebildet, wie dies insbesondere die Darstellung nach Fig. 4 erkennen lässt.

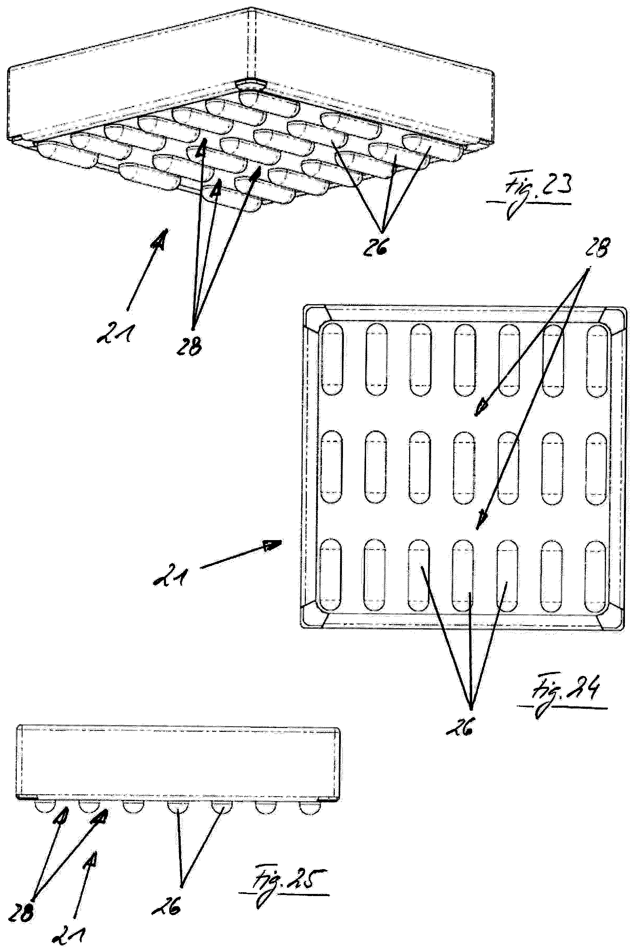

Ein Polsterelement 21 ist exemplarisch in den Fig. 23, 24 und 25 dargestellt, wobei Fig. 23 eine schematische Perspektivansicht, Fig. 24 eine Draufsicht von unten und Fig. 25 eine Seitenansicht betrifft.

Wie sich aus den Darstellungen nach den Fig. 23 bis 25 erkennen lässt, sind die Abstandshalter 26 im gezeigten Ausführungsbeispiel rechteckförmig ausgebildet, verfügen also über eine die Quererstreckung wesentlich übersteigende Längserstreckung. Dabei sind die Endbereiche der Abstandshalter 26 jeweils abgerundet ausgebildet. Es versteht sich indes von selbst, dass die Abstandshalter 26 auch andere geometrische Ausbildungen aufweisen können, beispielsweise andersartig polygon oder auch kreisförmig. Entscheidend ist, dass die Abstandshalter 26 beabstandet voneinander angeordnet sind, so dass sie zwischen sich einen Volumenraum 28 ausbilden, der in schon vorbeschriebener Weise für eine Unterlüftung eines im bestimmungsgemäßen Verwendungsfall auf einem Traguntergrund 27 aufliegenden Polsterelements 21 Sorge trägt.

Gemäß einer bevorzugten Ausführungsform der Erfindung sind die Abstandshalter 26 aus einem Formvlies gebildet und mit dem Polsterelement 21 lösbar verbunden. Eine solch lösbare Verbindung gestattet es, einen unter Umständen vorhandenen Polsterbezug bei Bedarf entfernen und waschen zu können. Eine solch lösbare Anordnung der Abstandshalter 26 kann beispielsweise durch eine Klettung erreicht werden.

Die Abstandshalter 26 aus Formvlies sind ihrerseits dampf- und feuchtigkeitsdurchlässig ausgebildet, was ebenfalls einer möglichen Schimmelbildung im oder am Polsterelement 21 entgegenwirkt.

Die erfindungsgemäße Bereitstellung von mit Abstandshaltern 26 ausgerüsteten Polsterelementen 21 erfüllt im Wesentlichen zwei Vorteile. Zum einen kann auf die Verwendung eines Lattenrosts verzichtet werden. Zum anderen wird aber auch gleichzeitig sichergestellt, dass die Polsterelemente 21 nicht vollflächig auf dem Traguntergrund 27 aufliegen, sondern stattdessen eine Hinterlüftung der Polsterelemente 21 gestattet ist. Hierdurch ist insbesondere sichergestellt, dass es nicht ungewollt zu feuchtigkeitsbedingten Schäden der Polsterelemente 21 beispielsweise durch Schimmelbildung kommen kann.

Die mit den Abstandshaltern 26 geschaffene Möglichkeit, auf eine Unterfederung des Matratzenkörpers 20 durch ein Lattenrost verzichten zu können, ist insbesondere deshalb von Vorteil, weil die einzelnen Polsterelemente 21 auch dazu genutzt werden können, in anderer Weise übereinander und/oder nebeneinander gestapelt werden zu können, beispielsweise zur Ausbildung einer Sitzgruppe, wie in den Fig. 13 und 14 dargestellt. In diesem Fall kann durch eine einfache Umrüstung des Matratzenkörpers 20 aus einer Matratzeneinrichtung 19 eine Sitzeinrichtung geschaffen werden, wobei es verwenderseitig nicht erforderlich ist, hierfür ein Lattenrost verstauen bzw. anderswo unterbringen zu müssen, da aufgrund der Abstandshalter-Ausgestaltung in schon vorbeschriebener Weise auf die Verwendung eines Lattenrosts gänzlich verzichtet werden kann.

Die Polsterelemente 21 bilden in der Konstellation als Matratzenkörper 20 zwischen sich jeweils Kontaktspalten aus. Zwar können die einzelnen Polsterelemente 21 in Längsrichtung 24 nicht verrutschen, da sie einendseitig wie anderendseitig von dem jeweiligen Seitenteile 4 und 5 des Grundelements 2 gehalten werden, doch um im bestimmungsgemäßen Verwendungsfall den Schlafkomfort zu erhöhen, ist die auf der Oberseite 23 des Matratzenkörpers 20 vorgesehene Matratzenauflage 22 ausgebildet. Die Matratzenauflage 22 dient mithin nicht nur einem Schutz der einzelnen Polsterelemente 21, sie sorgt auch für eine durchgängige und spaltenfrei ausgebildete Schlafoberfläche.

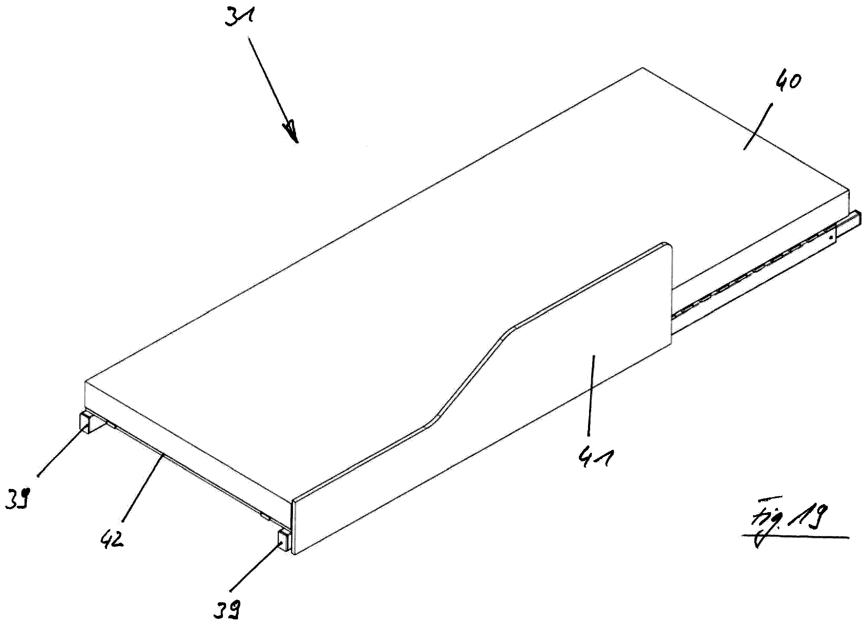

In schon vorbeschriebener Weise kann in den Nutzraum 12 nicht nur eine erste Betteinrichtung 30, sondern wahlweise auch eine zweite Betteinrichtung 31 und/oder eine dritte Betteinrichtung 32 eingebracht werden, wie dies beispielsweise die Fig. 7 bis 12 zeigen. Dabei sind die Betteinrichtungen 31 und 32 vorzugsweise identisch ausgebildet. Eine solche Betteinrichtung ist am Beispiel der zweiten Betteinrichtung 31 in den Fig. 19 bis 22 näher dargestellt.

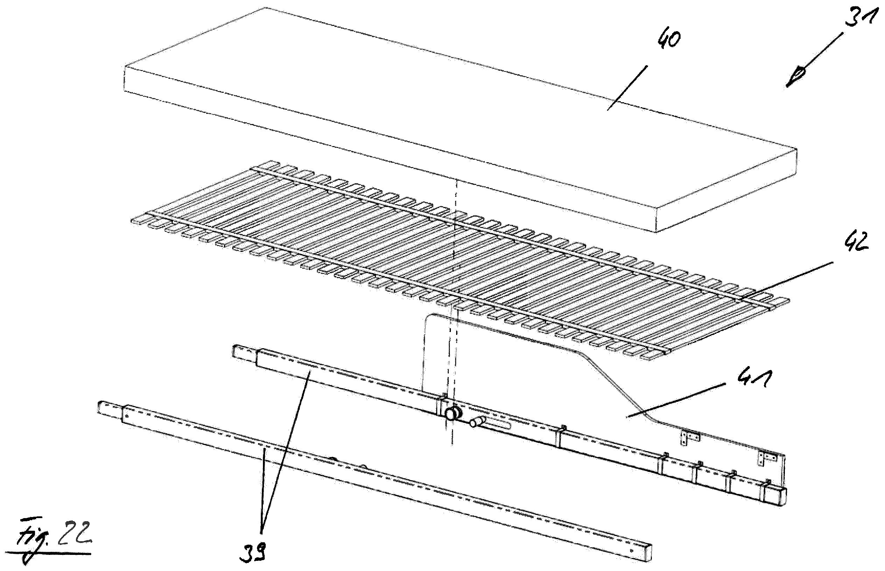

Wie sich aus einer Zusammenschau insbesondere der Fig. 19 und 22 ergibt, verfügt eine Betteinrichtung 31 über zwei Tragprofile 39, die teleskopierbar ausgebildet sind. Im endmontierten Zustand ist auf den beiden Tragprofilen 39 ein Rolllattenrost 42 abgelegt, der seinerseits eine darauf abgelegte Matratze 40 abstützt.

Ein in den Figuren gezeigtes Tragprofil 39 ist zweiteilig ausgebildet und verfügt über einen ersten Abschnitt 43 und einen zweiten Abschnitt 44. Dabei ist der erste Abschnitt 43 nach Art eines Rohres ausgebildet, das den nach Art eines Profilkörpers ausgebildeten zweiten Abschnitt 44 teleskopierbar verfahrbar aufnimmt. Diese teleskopierbare Ausgestaltung des Tragprofils 39 ermöglicht eine verwenderseitig werkzeuglose Montage und bestimmungsgemäße Unterbringung in den vom Grundelement 2 bereitgestellten Nutzraum 12. Diese Montage geht wie folgt vonstatten.

Ein Tragprofil 39 ist im eingefahrenen Zustand in Längsausrichtung des Nutzraums 12 in diesen einzubringen. Zur positionssicheren Anordnung eines Tragprofils 39 am Grundelement 2 verfügen die Seitenteile 4 und 5 in schon vorbeschriebener Weise über Aufnahmen 17, in welche ein Tragprofil 39 sowohl einendseitig als auch anderendseitig einzuführen ist. Um dies zu ermöglichen, ist das Tragprofil 39 entsprechend auszurichten und in Position zu bringen und alsdann sind die beiden Abschnitte 43 und 44 eines Tragprofils 39 in Längsrichtung des Tragprofils 39 auseinander zu verfahren, bis das Tragprofil 39 in die zugehörigen Aufnahmen 17 einendseitig und anderendseitig eingreift.

In dieser Position des Tragprofils 39 sind die beiden Abschnitte 43 und 44 in ihrer Position zu arretieren, sodass ein ungewolltes Zurückteleskopieren der beiden Abschnitte 43 und 44 unterbunden ist. Zu diesem Zweck verfügt ein jedes Tragprofil 39 über eine werkzeuglos zu betätigende Arretiereinrichtung 45.

Sobald die Arretiereinrichtung 45 verwenderseitig betätigt ist, ist ein Zurückteleskopieren des Tragprofils 39 unterbunden, womit dieses lösbar, gleichwohl aber positionssicher an den Seitenteilen 4 und 5 des Grundelements 2 angeordnet ist. Sobald die beiden Tragprofile 39 einer Betteinrichtung montiert sind, kann auf diese der Rolllattenrost 42 und alsdann die Bettmatratze 40 aufgelegt werden.

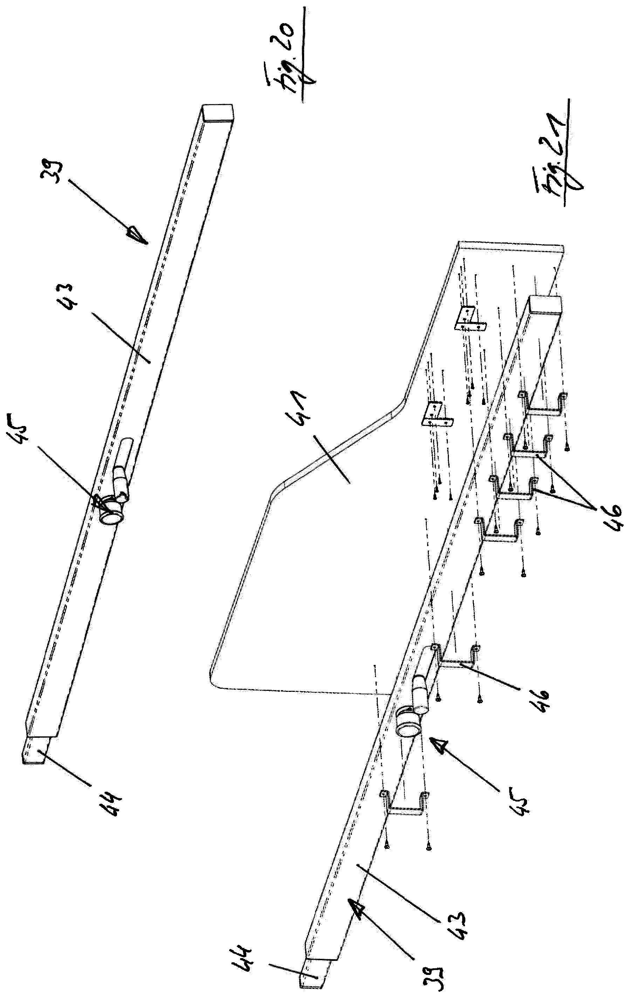

Im gezeigten Ausführungsbeispiel ist je Betteinrichtung 31 bzw. 32 ein Tragprofil 39 vorgesehen, das über eine Absturzsicherung 41 verfügt. Dabei ist im gezeigten Ausführungsbeispiel die Absturzsicherung 41 als Plattenelement ausgebildet, das mit Bügeln 46 dauerhaft mit dem ersten Abschnitt 43 des Tragprofils 39 verbunden ist. Dieser Sachzusammenhang ergibt sich insbesondere aus der Darstellung nach den Fig. 20 und 21.

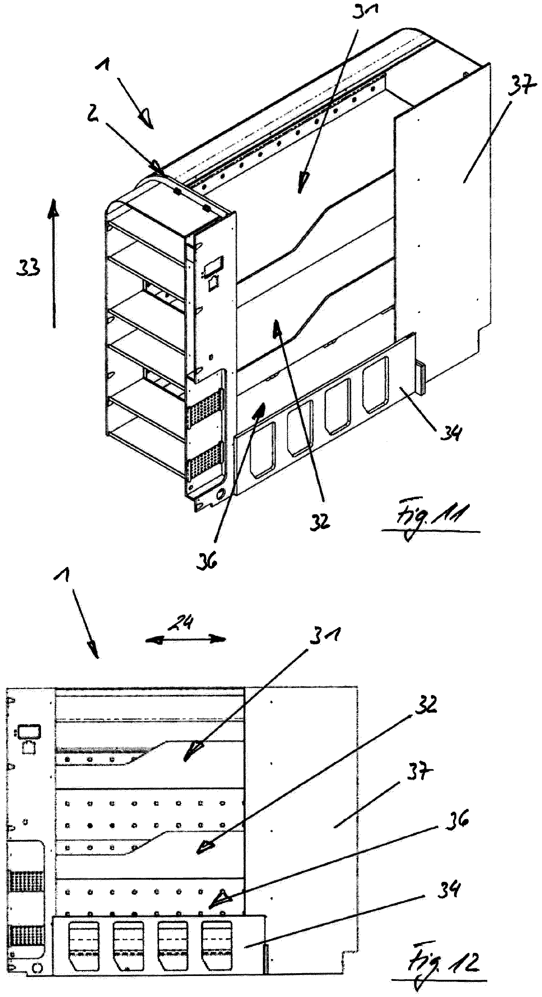

In den gezeigten Ausführungsbeispielen ist das Möbelmodul 1 dazu ausgebildet, zumindest teilweise in eine Nische zwischen einer vom Wohnwagen, Reisemobil, Kastenwagen und/oder dergleichen bereitgestellten Wand 6 einerseits und einer Seitenwand 37 einer benachbarten und in den Figuren nicht näher dargestellten weiteren Möbeleinrichtung eingebracht zu werden, welche Seitenwand 37 beispielsweise in den Fig. 11 und 12 sowie 15 bis 18 dargestellt ist. Wie sich aus diesen Figuren ergibt, ist durch eine solche Seitenwand 37 eine Betteinrichtung 30, 31 und 32 mit Bezug auf ihre jeweilige Längsausrichtung 24 bereits teilweise abgedeckt. Aus diesem Grunde sind auch die jeweils zugehörigen Absturzsicherungen 41 nicht über die gesamte Längserstreckung einer Betteinrichtung ausgebildet, sondern decken vielmehr nur die sich in Längsrichtung 24 ergebende Lücke zwischen dem Seitenteil 5 des Grundelements 2 und der Seitenwand 37 ab.

Für eine Zugänglichmachung einer in Höhenrichtung 33 zuoberst ausgebildeten zweiten Betteinrichtung 31 ist ein mit Trittausnehmungen 35 ausgebildetes Plattenelement 34 vorgesehen, das als Leiter dient. Dieser Sachzusammenhang ergibt sich beispielsweise aus den Fig. 7 und 8. Dieses Plattenelement 34 kann auch dazu genutzt werden, den sich unterhalb einer zweiten oder dritten Betteinrichtung 31, 32 ergebenden Stauraum 36 frontseitig zu sichern, wie dies beispielsweise die Fig. 11 und 12 zeigen. In diesem Fall stützt sich das Plattenelement 34 an dem mit Bezug auf die Zeichnungsebene nach Fig. 12 linken Seitenteil 5 einerseits und der in den Figuren nicht näher dargestellten weiteren Möbeleinrichtung ab, welche weitere Möbeleinrichtung die Seitenwand 37 bereitstellt. Das Plattenelement 34 ist mithin für eine verwenderseitig wahlweise Anordnung in Höhen- oder Längsausrichtung des Grundelements 2 am Grundelement 2 ausgebildet. Dies kann beispielsweise durch entsprechende Haken realisiert sein, die einerseits in Höhenausrichtung mit einer Absturzsicherung einer der Betteinrichtungen und andererseits in Längsausrichtung mit dem Seitenteil 5 zusammenwirken.

Wie sich aus der vorstehenden Beschreibung anhand der Figuren ergibt, ermöglicht das erfindungsgemäße Möbelmodul 1 eine verwenderseitig multifunktionale Nutzung des vom Möbelmodul 1 bereitgestellten Nutzraums 12. Dabei ist der Nutzraum 12 in seinen Abmessungen definiert, was es gestattet, wahlweise zur Verfügung gestellte Funktionselemente nach dem Baukastenprinzip miteinander zu kombinieren, um so den Nutzraum 12 in Entsprechung von verwenderseitigen Vorstellungen individuell verwendbar zu machen. Dabei können die einzelnen Funktionselemente werkzeuglos montiert werden, was eine Umrüstung gestattet. Insbesondere können einmal montierte Funktionselemente wieder demontiert und/oder durch andere Funktionselemente ergänzt werden.

Ein besonderes Ausführungsbeispiel betrifft die Nutzung des Nutzraums 12 als Bettbereich, insbesondere als Bettbereich für Kinder. Dabei können je nach Anzahl der unterzubringenden Kinder eine entsprechende Anzahl von Betteinrichtungen vorgesehen sein. Alternativ ist die Nutzung eines Stauraums unterhalb einer Betteinrichtung, beispielsweise als Arbeitsplatz oder als "Kinderspielhöhle".

Es können bis zu drei Betteinrichtungen 30, 31 und 32 vorgesehen sein, die sich verwenderseitig einzeln und werkzeuglos ein- und aushängen lassen und deshalb nicht herstellerseitig vormontiert werden müssen.

Die in Höhenrichtung zuunterst vorgesehene Betteinrichtung 30 verfügt indes gemäß eines besonderen Ausführungsbeispiels der Erfindung über drei Polsterelemente, die einzeln gehandhabt werden können und aus denen im Bedarfsfall eine Sitzgruppe zusammengesetzt werden kann. Eine solche Sitzgruppe kann im Bedarfsfall durch einen Tisch ergänzt werden, welcher ebenfalls werkzeuglos in das Lochmuster der Rückwand 3 eingehängt werden kann. Weitere Zubehörteile die an der Rückwand 3 angebracht werden können, sind beispielsweise Netztaschen und Gurte, die zum Verstauen und/oder Fixieren von Gegenständen genutzt werden können. Des Weiteren besteht die Möglichkeit, weitere Zubehörteile oder Erweiterungen vorzusehen, welche wahlweise am Lochraster der Rückwand 3 fixiert werden können. Hierzu zählen beispielsweise unter anderem Kleiderhaken, Kleiderstangen, Regale, Schreibtischplatten und/oder dergleichen.

### Bezugszeichen

- 1: Möbelmodul
- 2: Grundelement
- 3: Rückwand
- 4: Seitenteil
- 5: Seitenteil
- 6: Wand
- 7: Fenster
- 8: Ausschnitt
- 9: Durchtrittsöffnung
- 10: Volumenraum
- 11: erster Volumenraumbereich (Luftverteilraum)
- 12: zweiter Volumenraumbereich (Nutzraum)
- 13: Luftkanal
- 14: Abdeckung
- 15: Möbelmodul
- 16: Regalfach
- 17: Aufnahme
- 18: Lichteinrichtung
- 19: Matratzeneinrichtung
- 20: Matratzenkörper
- 21: Polsterelement
- 22: Matratzenauflage
- 23: Oberseite
- 24: Längsrichtung
- 25: Unterseite
- 26: Abstandshalter
- 27: Traguntergrund
- 28: Volumenraum
- 29: Tisch
- 30: erste Betteinrichtung
- 31: zweite Betteinrichtung
- 32: dritte Betteinrichtung
- 33: Höhenrichtung
- 34: Plattenelement
- 35: Trittausnehmung
- 36: Stauraum
- 37: Seitenwand
- 38: Vorhang
- 39: Tragprofil
- 40: Matratze
- 41: Absturzsicherung
- 42: Rolllattenrost
- 43: erster Abschnitt
- 44: zweiter Abschnitt
- 45: Arretiereinrichtung
- 46: Bügel

## Patentansprüche

1. Möbelmodul (1) für den Einbau in einen Wohnwagen, ein Reisemobil, einen Kastenwagen und/oder dergleichen, mit einem Grundelement (2), das einen Nutzraum (12) bereitstellt, und einer Mehrzahl von Betteinrichtungen (30, 31, 32) zur Unterbringung im Nutzraum (12), wobei die Betteinrichtungen (30, 31, 32) verwenderseitig nach dem Baukastenprinzip wahlweise miteinander kombinierbar ausgebildet und mit Mitteln ausgerüstet sind, die dazu eingerichtet sind, die Betteinrichtungen (30, 31, 32) verwenderseitig werkzeuglos am Grundelement (2) lösbar, gleichwohl aber positionssicher anzuordnen, **dadurch gekennzeichnet, dass** das Grundelement (2) eine Rückwand (3) sowie zwei sich daran anschließende Seitenteile (4, 5) aufweist und dass das Grundelement (2) in seinen geometrischen Abmessungen einen vom Wohnwagen, Reisemobil, Kastenwagen und/oder dergleichen bereitgestellten Einbauraum ausnutzend ausgebildet ist, wobei die Rückwand (3) einen vom Grundelement (2) bereitgestellten Volumenraum (10) in einen ersten, als Luftverteilraum dienenden Volumenraumbereich (11) einerseits und einen zweiten Volumenraumbereich andererseits unterteilt, wobei der zweite Volumenraumbereich den Nutzraum (12) bildet und wobei die Rückwand (3) für eine strömungstechnische Verbindung der beiden Volumenraumbereiche (11, 12) eine Durchtrittsöffnung (9) aufweist.

2. Möbelmodul (1) nach Anspruch 2, **dadurch gekennzeichnet, dass** der erste Volumenraumbereich (11) dazu eingerichtet ist, hieran eine vom Wohnwagen, Reisemobil, Kastenwagen und/oder dergleichen bereitgestellte Klima- und/oder Heizeinrichtung strömungstechnisch anzuschließen.

3. Möbelmodul (1) nach Anspruch 2 oder 3, **dadurch gekennzeichnet, dass** die Rückwand (3) eine Mehrzahl von Durchtrittsöffnungen (9) aufweist.

4. Möbelmodul (1) nach Anspruch 4, **dadurch gekennzeichnet, dass** die Mehrzahl von Durchtrittsöffnungen (9) über die Rückwand (3) gleich verteilt ausgebildet ist.

5. Möbelmodul (1) nach einem der vorhergehenden Ansprüche, **dadurch gekennzeichnet, dass** eine erste Betteinrichtung (30) eine Matratzenrichtung (19) mit einem Matratzenkörper (20) und einer auf der Oberseite (23) des Matratzenkörpers (20) angeordneten Matratzenauflage (22) aufweist, wobei der Matratzenkörper (20) eine Mehrzahl von einzelnen und separat voneinander handhabbaren Polsterelementen (21)aufweist, die in Längsrichtung (24) des Matratzenkörpers (20) in Reihe hintereinander angeordnet sind, wobei die Polsterelemente (21) auf ihrer der Oberseite (23) des Matratzenkörpers (20) gegenüberliegenden Unterseite (25) mit Abstandshaltern (26) zur beabstandeten Anordnung der Polsterelemente (21) auf einem Traggrund (27) ausgerüstet sind.

6. Möbelmodul (1) nach einem der vorhergehenden Ansprüche, **dadurch gekennzeichnet, dass** eine zweite Betteinrichtung (31) zwei sich in Längsrichtung (24) des Grundelements (2) erstreckende Tragprofile (39) aufweist, die jeweils teleskopierbar ausgebildet sind.

7. Möbelmodul (1) nach Anspruch 7, **dadurch gekennzeichnet, dass** ein Tragprofil (39) eine Arretiereinrichtung (45) aufweist, die dazu eingerichtet ist, teleskopierbar zueinander verfahrbar ausgebildete Abschnitte (43, 44) des Tragprofils (39) in ihrer Verfahrbarkeit zu sperren.

8. Möbelmodul (1) nach einem der vorhergehenden Ansprüche 2 bis 8, **dadurch gekennzeichnet, dass** die Seitenteile (4, 5) jeweils Aufnahmen (17) aufweisen, die dazu eingerichtet sind, ein Tragprofil (39) endseitig aufzunehmen.

9. Möbelmodul (1) nach Anspruch 7, 8 oder 9, **dadurch gekennzeichnet, dass** ein Tragprofil (39) mit einer Absturzsicherung (41) ausgerüstet ist.

10. Möbelmodul (1) nach einem der vorhergehenden Ansprüche 7 bis 10, **dadurch gekennzeichnet, dass** die zweite Betteinrichtung (31) ein Rolllattenrost (42) aufweist, der im endmontierten Zustand von zwei sich zwischen den beiden Seitenteilen (4, 5) des Grundelements (2) angeordneten Tragprofilen (39) abgestützt ist.

11. Möbelmodul (1) nach einem der vorhergehenden Ansprüche, **gekennzeichnet durch** ein mit Trittausnehmungen (35) ausgebildetes Plattenelement (34), das für eine verwenderseitig wahlweise Anordnung in Höhen- oder Längsausrichtung des Grundelements (2) am Grundelement (2) ausgebildet ist.

12. Wohnwagen, Reisemobil, Kastenwagen und/oder dergleichen, mit einem Möbelmodul (1) nach einem der vorhergehenden Ansprüche 1 bis 12.
